**Europäisches Patentamt**

**European Patent Office**

**Office européen des brevets**

(19)

(11) Veröffentlichungsnummer: **0 388 401 B1**

(12) **EUROPÄISCHE PATENTSCHRIFT**

(45) Veröffentlichungstag der Patentschrift: **24.03.93**

(51) Int. Cl.5: **G06F 9/44**, G06F 15/18

(21) Anmeldenummer: **87907741.0**

(22) Anmeldetag: **01.12.87**

(86) Internationale Anmeldenummer:
**PCT/DE87/00562**

(87) Internationale Veröffentlichungsnummer:
**WO 89/05487 (15.06.89 89/13)**

(54) **SELBSTENTWICKELNDES COMPUTERSYSTEM.**

(43) Veröffentlichungstag der Anmeldung:
**26.09.90 Patentblatt 90/39**

(45) Bekanntmachung des Hinweises auf die
Patenterteilung:
**24.03.93 Patentblatt 93/12**

(84) Benannte Vertragsstaaten:
**DE FR GB**

(56) Entgegenhaltungen:
**EP-A- 0 137 414**

**Proceedings of the International Conference on Systems, Man and Cybernetics, 14-17. Oktober 1986, Atlanta, US, IEEE, (New York, US) J.N. Warfield: "Micromathematics and macromathematics", Seiten 1127-1131.**

**Inspec. Abstract, no. 87000490, Inspec IEE (London, GB) R.S. Michalski et al.: AO15, inductive learning system: an overview and experiments" Rep. no. UIUCDCS-R-86-1260, Univ. Illinois at Urbana-Champaign, US;**

(73) Patentinhaber: **AMMON, Kurt**
**Windmühlenweg 27**
**W-2000 Hamburg 52(DE)**

(72) Erfinder: **AMMON, Kurt**
**Windmühlenweg 27**
**W-2000 Hamburg 52(DE)**

Inspec. Abstract, no. 88030789, Inspec. IEE (London, GB) D.ST. Clairet al.: "An architecture for adaptive learning in rule-based diagnostic systems" Seiten 678-683, &Proceedings 1987 Fall Joint Computer Conference - Exploring technology: today and tomorrow, 25-29 Oktober, 1987, Dallas, Texas, US.

Artificial Intelligence, Band 33, Nr. 1, September 1987 (Amsterdam, NL) J.E.Laird: "SOAR: An architecture for general intelligence", Seiten 1-64.

Artificial Intelligence, Band 21, Nr. 1, 2. März 1983 (Amsterdam, NL) D.B.Lenat: "Eurisko: A program that learns new heuristics and domain concepts", Seiten 61-98.

Annals of the New York Academy of Sciences, Band 426, 1983 York Academy of Sciences, (New York, US) J. McCarthy: "Some expert systems need coomon sense", Seiten 129-137.

Proceedings of the 8th International Conference on Artificial Intelligence", August 1983, Karlsruhe, DE Kaufmann (Los Altos, CA, US) T.M. Mitchell: "Learning and problem solving" Seiten 1139-1151

Computer, Band 19, Nr. 1, Januar 1986 (New York, US) C. Kellog: "From data management to knowledge management", Seiten 75-84.

Symposium on Logic Programming, 22-25. September 1986, Salt Lake City, Utah, US IEEE (New York, US) W.W. Bledsoe: "Some thoughts on proof discovery", Seiten 2-10.

Bigre et Globule, Nr. 50, 1986 M: Kharoune: "Oeue demande-t-on aux multiprocesseur pour exécuter PROLOG?" Seiten 57-69.

**Beschreibung**

TECHNISCHES GEBIET

Die Erfindung gehört in das Gebiet der Künstlichen Intelligenz", die ein Teilgebiet der Informatik ist. Sie betrifft ein Computersystem mit einem Speicher zur Speicherung von Wissen, das Eingabesignale analysiert, dabei durch Änderung und Erweiterung des Wissens in seinem Speicher seine Leistungsfähigkeit verbessert und auf der Grundlage seines veränderten und erweiterten Wissens Ausgabesignale produziert. Die Eingabesignale können zum Beispiel von Tastaturen oder Sensoren erzeugt werden und die Ausgabesignale Drucker, Sichtgeräte oder Bewegungen von Robotern steuern.

STAND DER TECHNIK

Herkömmliche Computersysteme einschließlich Robotern sind nicht in der Lage, durch substantielle Änderungen und Erweiterungen der Programme oder des Wissens in ihren Speichern automatisch ihre Leistungsfähigkeit zu verbessern (E. A. Feigenbaum und P. McCorduck. "The Fifth Generation: Artificial Intelligence and Japan's Computer Challenge to the World", Addison-Wesley, Menlo Park, Kalifornien, 1983, S. 237). Solche Änderungen und Erweiterungen der Programme oder des Wissens in Maschinen werden traditionellerweise von menschlichen Experten auf der Grundlage einer Analyse eines Anwendungsgebiets ausgeführt, d. h. die Programme oder das Wissen werden manuell auf der Grundlage einer manuellen Analyse des Anwendungsgebiets entwickelt.

Der bestimmungsgemäße Gebrauch herkömmlicher Computersysteme besteht darin, daß manuell erstellte Programme, die aus Folgen von elementaren und vollständigen Anweisungen bestehen, und Daten, die von diesen Programmen verarbeitet werden sollen, über Eingabegeräte in ihre Speicher geladen werden, daß die Programme unter Verwendung von Prozessoren auf die Daten angewendet werden und daß die endgültigen Ergebnisse an Ausgabegeräte übertragen werden.

Das Gebiet der Expertensysteme beschäftigt sich mit der Entwicklung von Computersystemen, die Sachkenntnisse in einem Anwendungsgebiet besitzen (F. Hayes-Roth. D. A. Waterman und D.B. Lenat, "Building Expert Systems", Addison-Wesley, London, 1983). Ein Expertensystem besteht aus einem einer Wissensbasis (knowledge base) und einer Inferenzmaschine (inference machine). Die Wissensbasis enthält Wissen über ein Anwendungsgebiet und die Inferenzmaschine Methoden zur Anwendung dieses Wissens. Das Wissen setzt sich aus Fakten (facts) des Anwendungsgebiets und heuristischen Regeln (heuristic rules), die Erfahrungswissen enthalten, zusammen. Die Wissensbasis und die Inferenzmaschine werden manuell auf der Gundlage einer manuellen Analyse des Anwendungsgebiets entwickelt. Expertensysteme zeigen in eng begrenzten Anwendungsgebieten Leistungen, die mit denen menschlicher Experten vergleichbar sind (ibd., S. 38). Zwei der bekanntesten Expertensysteme sind MYCIN und R1. MYCIN diagnostiziert Blutkrankheiten und unterbreitet Vorschläge für ihre Therapie (E. H. Shortliffle, "MYCIN: Computer-Based Medical Consultations", American Elsevier, New York, 1976). R1 erstellt aus Kundenaufträgen Konfigurationen für das VAX Computersystem der Digital Equipment Corporation. Diese Konfigurationen bestehen aus Diagrammen, die die räumlichen Beziehungen zwischen den Komponenten der Aufträge zeigen (J.McDermott."R1:A Rule-Based Configurer of Computer Systems", Technical Report CMU-CS-80-119, Computer Science Department, Carnegie-Mellon University, Pittsburg, Pennsylvania, 1980). Weiterentwicklungen der Technologie der Expertensysteme haben zum Beispiel das Ziel, die Effizienz der Inferenzmaschine zu erhöhen. So offenbart die europäische Patentanmeldung EP. A2. 0137414 (Anmelder HITACHI) 17. April 1985 ein System, das die Fakten (facts) und heuristischen Regeln (rules) in einem Assoziationsnetz verknüpft, auf dessen Grundlage in effizienter Weise Schlußfolgerungen (inference results) aus den Fakten und Regeln abgeleitet werden können. Auch bei solchen Weiterentwicklungen von Expertensystemen werden die Wissensbasis und die Inferenzmaschine manuell auf der Grundlage einer manuellen Analyse des Anwendungsgebiets entwickelt.

Das Gebiet des Maschinenlernens hat das Ziel, Computersysteme zu entwickeln, die das Wissen in ihren Speichern verändern und erweitern. Einige der bekanntesten Systeme dieser Art werden im folgenden kurz beschrieben. Systeme, die das Verfahren des "Erklärungsbasierten Lernens" (explanation-based learning) verwenden, transformieren eine manuell vorgegebene ineffiziente Definition eines zu lernenden Begriffs in eine effiziente Definition auf der Basis einer manuell vorgegebenen Beschreibung eines Beispiels, einer manuell vorgegebenen Theorie des Anwendungsgebiets und manuell vorgegebener Kriterien, die effiziente Ausdrücke angeben, in denen der zu lernende Begriff ausgedrückt werden soll (T. M. Mitchell, R. M. Keller und S. T. Cedar-Cabelli. "Explanation-based generalization: A unifying view", Machine Learning, Bd. 1, Nr. 1, 1986, S. 47-80). Das LP System lernt neue Methoden zur Lösung von Gleichungen

3

durch ein Verfahren, das "Vorbedingungsanalyse" (precondition analysis) genannt wird (B. Silver, "Precondition analysis: Learning control information", in R. S. Michalski, J. G. Carbonell und T. M. Mitchell (Hrsg.), Machine Learning: An Artificial Intelligence Approach, Bd. II, Morgan Kaufmann, Los Altos, California, 1986). LP verwendet eine manuell vorgegebene differenzierte Syntax für seine Methoden (methods) und beginnt mit etwa fünfzehn vorgegebenen Methoden (ibd., S. 651). Das AM System entdeckte mathematische Definitionen und Vermutungen (D. B. Lenat. "AM: Discovery in mathematics as heuristic search", in D.B. Lenat und R. Davis, Knowledge-Based Systems in Artificial Intelliigence, McGraw-Hill, New York, 1982). Es basiert auf einer Menge manuell vorgegebener Begriffe (concepts), einer Menge manuell vorgegebener Entdeckungsregeln (heuristics) und einem detaillierten, von menschlichen Experten entwickelten Modell mathematischer Forschung (ibd., S. 61-101, S. 151-161, S. 35-59, S. 163-204 und S. 147-149). Das EURISKO System, welches eine Weiterentwicklung des AM Systems darstellt, wurde auch auf Gebiete außerhalb der Mathematik angewandt (D. B. Lenat, "EURISKO: A program that learns new heuristics and domain concepts", Artificial Intelligence, Bd. 21, 1983, S. 61-98). Es basiert ebenfalls auf einer Menge manuell vorgegebener Begriffe, einer Menge manuell vorgegebener Entdeckungsregeln und detaillierten, von menschlichen Experten entwickelten Modellen der Anwendungsgebiete. Somit basieren Lernsysteme auf differenzierten, manuell entwickelten Verfahren und umfangreichem komplexem Wissen, die ebenfalls manuell auf der Grundlage einer manuellen Analyse eines Anwendungsgebiets entwickelt werden. Die Komplexität der Anwendungsgebiete herkömmlicher Lernsysteme entsprechen dem Schwierigkeitsgrad von Aufgaben der Schulmathematik oder dem Komplexitätsgrad von Entdeckungen in elementarer Mathematik (T. M. Mitchell, R. M. Keller und S. T. Cedar-Cabelli, "Explanation-based generalization: A unifying view", Machine Learning, Bd. 1, Nr. 1, 1986, S. 61-64; B. Silver, "Precondition analysis: Learning control information", in R. S. Michalski, J. G. Carbonell und T. M. Mitchell (Hrsg.), Machine Learning: An Artificial Intelligence Approach, Bd. II, Morgan Kaufmann, Los Altos, California, 1986, S. 647; D. B. Lenat, "AM: Discovery in mathematics as heuristic search", in D. B. Lenat und R. Davis, Knowledge-Based Systems in Artificial Intelligence, McGraw-Hill, New York, 1982, S. 7).

Außerhalb des Gebiets des Machinenlernens gab es keine erfolgreichen Versuche, Theorien, insbesondere von Maschinen ausführbare Verfahren, für die Konstruktion neuen Wissens zu entwickeln (H. A. Simon, "Does scientific discovery have a logic?", Philosophy of Science, Vol. 40, No. 4, 1973, S. 474; H. A. Simon und A. Newell, "Informationsverarbeitung und Problemlösen", in G. Steiner (Hrsg.), Piaget und die Folgen, Kindler, Zürich, 1978, S. 247). Diese fehlgeschlagenen Versuche hatten das Ziel, solche Theorien und Verfahren zu manuell entwickeln. Bekannte Wissenschaftler wie A. Einstein, W. Heisenberg und K. R. Popper meinten, daß es keine Theorien über die Entstehung neuen Wissens, insbesondere keine maschinellen Verfahren für dessen Konstruktion, gibt (vgl. K. Ammon, "The Automatic Development of Concepts and Methods", Dissertation, Universität Hamburg, 1988, S. 178). Zum Beispiel bezeichnete der amerikanische Philosoph C. S. Peirce im letzten Jahrhundert die Denkprozesse, die neues Wissen produzieren, als Abduktion (abduction). Er gab jedoch kein Verfahren an, wie die Abduktion erreicht werden könnte und das in naheliegender Weise auf Maschinen anwendbar wäre. Seine Gedanken werden nicht einmal als systematische Theorie über die Entstehung neuen Wissens angesehen. Daher ist insbesondere die von Warfield (J. N. Warfield, "Micromathematics and macromathematics", Proceedings of the IEEE International Conference on Systems, Man, and Cybernetics, Atlanta, USA, October 14-17, 1986, IEEE, New York, USA) angeregte Anwendung der Abduktion auf bekannte Technologien, wie die Technologie der Expertensysteme oder deren Weiterentwicklungen, nicht in naheliegender Weise realisierbar.

Der obige Überblick über herkömmliche Computersysteme, Expertensysteme, Lernsysteme und sonstiger, zum Beispiel in der Philosophie entwickelter Systeme für die Konstruktion neuen Wissens zeigt, daß diese Systeme auf manuell entwickelten Theorien basieren, die die Programme, die Verfahren oder das Wissens in diesen Systemen enthalten. Die Theorien werden aufgrund einer manuellen Analyse eines Anwendungsgebietes konstruiert. Dies bedeutet, daß es explizite, nicht elementare Beschreibungen der Mechanismen gibt, die in diesen Systemen Informationen verarbeiten oder neues Wissen erzeugen. Dies bedeutet auch, daß die Informationen in den Ein- und Ausgaben dieser Systeme, insbesondere die Beziehungen zwischen den Ein- und Ausgaben, durch Theorien erfaßbar sind. Daher haben diese Systeme den Nachteil, daß sie nicht in komplexen Bereichen eingesetzt werden können, die nur unvollständig durch Theorien erfaßbar sind und somit automatische Änderungen und Erweiterungen der Theorien, d. h. ihrer Programme, ihrer Verfahren oder ihres Wissens, erforderlich sind. Zum Beispiel werden Computerprogramme von menschlichen Experten aufgrund einer Analyse eines Anwendungsgebiets in aufwendigen Arbeitsprozessen konstruiert. Daher sind herkömmliche Computersysteme nicht in Bereichen einsetzbar, die nur unvollständig durch Theorien erfaßbar sind. Diese Nachteile besitzen auch herkömmliche Expertensysteme und herkömmliche Lernsysteme: Die Erweiterung von Expertensystemen über den bei ihrer Konstruktion betrachteten Anwendungsbereich ist sehr schwierig (J. McCarthy, "Some expert systems need common sense", Annals of the New York Academy of Sciences, Bd. 426, 1983, S. 129-137) und die Leistung von Lernsystemen nimmt nach einiger Zeit drastisch ab (D. B. Lenat, "AM; Discovery in mathematics as heuristic search", in D. B. Lenat und R. Davis, Knowledge-Based Systems in Artificial Intelligence, McGraw-Hill, New York, 1982, S. 7 und S. 135; T. M. Mitchell, "Learning and problem solving", Proceedings of the Eighth International Conference on Artificial Intelligence, Karlsruhe, Deutschland, August 1983, Kaufmann, Los Altos, California, USA).

## DARSTELLUNG DER ERFINDUNG

Der Erfindung liegt die Aufgabe zugrunde, ein benutzerfreundliches und wirtschaftliches Computersystem mit einem Speicher zur Speicherung von Wissen zu schaffen, das auch in Bereichen eingesetzt werden kann, die nur unvollständig durch Theorien erfaßt werden können und somit automatische Änderungen und Erweiterungen seines Wissens erforderlich sind.

Diese Aufgabe wird erfindungsmäßig durch das im folgenden beschriebene Computersystem gelöst. Es verarbeitet mit Hilfe des Wissens in seinem Speicher Eingabesignale und erzeugt als endgültiges Ergebnis Ausgabesignale, wobei die Eingabe- und Ausgabesignale Informationen repräsentieren. Es heißt selbstentwickelnd, da es in Lage ist, neues Wissen auf der Grundlage von elementarerem Wissen zu erzeugen. Das Wissen in einem selbstentwickelnden Computersystem enthält Sachkenntnisse und eine Reflexionsbasis. Die Sachkenntnisse enthalten Wissen, das sich auf ein Anwendungsgebiet bezieht, zum Beispiel Fakten, Erfahrungswissen oder Methoden, die zum Anwendungsgebiet gehören oder in ihm benutzt werden können. Die Reflexionsbasis enthält elementare vollständige Anweisungen einer Programmiersprache, die von herkömmlichen Prozessoren ausführbar sind, und elementares exaktes Wissen über diese Anweisungen. Die Verarbeitung der Eingabesignale geschieht dadurch, daß auf der Grundlage der Sachkenntisse und der Reflexionsbasis Anweisungen erzeugt werden, die sich aus elementaren vollständigen Anweisungen einer Programmiersprache zusammensetzen, und die Ausführung dieser Anweisungen von den Sachkenntnissen überwacht wird. Ein selbstentwickelndes Computersystem verändert und erweitert seine Sachkenntnisse aufgrund einer Analyse eines Anwendungsgebiets, die sich auf elementarere Sachkenntisse und die Reflexionsbasis stützt. Dies bedeutet, daß das neue Wissen nicht rein deduktiv aus dem elementareren Wissen abgeleitet werden kann und daß elementareres Wissens in den Sachkenntissen und der Reflexionsbasis oder Variationen dieses Wissens die wesentlichen Bestandteile des neuen Wissens liefern. Ein selbstentwickelndes Computersystem erzeugt somit neues Wissen nicht auf der Grundlage von manuell vorgegebenen expliziten Verfahren, sondern durch Erfahrung auf der Grundlage von elementarerem Wissen, d. h. das Wissen wird in einem Rückkopplungsprozeß für seine eigene Veränderung und Erweiterung verwendet. Auf diese Weise erzeugt das Computersystem in einem Rückkopplungsprozeß selbst Mechanismen, die die Sachkenntnisse verändern und erweitern. Dies hat zur Folge, daß jede vorgegebene explizite Beschreibung dieser Mechanismen nur elementare Sachkenntnisse und elementares Wissen aus der Reflexionsbasis enthält, da im voraus nur die elementaren Bestandteile dieser Mechanismen angegeben werden können. Die Unbestimmtheit dieser Mechanismen ist wesentlich dadurch bedingt, daß sie neues Wissen auf der Grundlage von elementarerem Wissen erzeugen (vgl. K. Ammon, "The Automatic Development of Concepts and Methods", Dissertation. Universität Hamburg, 1988, S. 80-83, S. 150-151, S. 174-175 und S. 178). Die wissenschaftliche Theorie, die den, selbstentwickelnden Computersystem zugrunde liegt, ist in der oben angegebenen Dissertation dargestellt.

Die Sachkenntnisse für ein Anwendungsgebiet setzen sich aus domänenspezifischen Komponenten zusammen, d. h. diese Komponenten gelten jeweils für bestimmte Teilbereiche des Anwendungsgebiets. Sind für Eingabesignale, d. h. für ein Anwendungsgebiet oder für einen Teilbereich eines Anwendungsgebiets, keine Kenntniskomponenten vorhanden, werden auf der Grundlage der Reflexionsbasis Kenntniskomponenten für Teilmengen der Eingabesignale erzeugt, wobei diese Komponenten elementare Kenntnisse über diese Teilmengen enthalten oder aus Teilen existierender Kenntniskomponenten durch Hinzufügung elementarer Kenntnisse entstehen. Die beschriebene Konstruktion neuer Kenntniskomponenten nenne ich Teilung. Ein selbstentwickelndes Computersystem versucht, vorhandene Kenntniskomponenten zu integrieren, d. h. sie zu einer einzigen Kenntniskomponente zusammenzufügen. Diese Integration existierender Kenntniskomponenten nenne ich Vereinheitlichung. Somit verändert und erweitert, ein selbstentwickelndes Computersystem seine Sachkenntnisse durch Teilungs- und Vereinheitlichungsprozesse domänenspezifischer Kenntniskomponenten. Die Prozesse, die in einem selbstentwickelnden Computersystem die Sachkenntnisse verändern und erweitern, enthalten Vereinfachungsprozesse, die wesentliche Sachkenntnisse von unwesentlichen trennen und so die wesentlichen herausfiltern. Dies kann dadurch erreicht werden, daß das System Variationen von Sachkenntnissen erzeugt, indem es zum Beispiel Teile der Sachkenntnisse versuchsweise löscht, und dann auf der Grundlage von elementarerem Wissen und Experimenten prüft; ob

5

die Variationen eine mit den ursprünglichen Sachkenntnissen vergleichbare Leistungsfähigkeit besitzen. Trifft dies zu, so werden diese Teile der Sachkenntnisse endgültig gelöscht. Die Erzeugung von Sachkenntnissen in einem selbstentwickelden Computersystem genügt dem Prinzip der Ökonomie, d. h. ein solches System hat die Tendenz seine Sachkenntnisse so zu verändern und zu erweitern, daß bisher unlösbare Aufgaben mit den vorhandenen Betriebsmitteln gelöst werden können und daß der Umfang der Betriebsmittel, der zur Lösung von Aufgaben erforderlich ist, verringert wird. Dies kann dadurch erreicht werden, daß das System auf der Grundlage von elementareren Sachkenntnissen und der Reflexionsbasis Variationen neuer Sachkenntnisse generiert und dann die leistungsfähigsten Variationen auswählt, d. h. die Variationen, die zum Beispiel einen größeren Leistungsumfang besitzen oder weniger Betriebsmittel erfordern. Die Erzeugung solcher Variationen ist zum Beispiel dadurch möglich, daß zwei domänenspezifische Komponenten der Sachkenntnisse in einer neuen Kenntniskomponente, die eine Variation der ursprünglichen Kenntniskomponenten darstellt, vereinheitlicht werden oder daß Variationen von Kenntniskomponenten dadurch generiert werden, daß Teile dieser Kenntniskomponenten gelöscht oder Teile anderer Kenntniskomponenten in sie eingefügt werden. Die Informationen in den Eingabe- und Ausgabesignalen eines selbstentwickelnden Computersystems, insbesondere die Beziehungen zwischen den Ein- und Ausgaben, brauchen nicht durch Theorien erfaßbar zu sein, da ein solches System in der Lage ist, neues Wissen auf der Grundlage von elementarerem Wissen zu erzeugen und mit Hilfe des neuen Wissens die Eingabesignale zu verarbeiten und die Ausgabesignale zu generieren. Wissen in der Reflexionsbasis kann elementarer sein als andere elementare vollständige Anweisungen und anderes elementares exaktes Wissen über diese Anweisungen. Ein selbstentwickelndes Computersystem ist daher in der Lage, die Reflexionsbasis in der Reise zu verändern und zu erweitern, in der es die Sachkenntnisse verändert und erweitert, wobei elementareres Wissen in der Reflexionsbasis die Funktion der Reflexionsbasis übernimmt und das veränderte und erweiterte Wissen der Reflexionsbasis die Funktion der Sachkenntnisse. Die Reflexionsbasis kann einen universellen Satz von elementaren vollständigen Anweisungen, aus denen alle vollständigen Anweisungen zusammengesetzt werden können, und elementares vollständiges Wissen über diese Anweisungen enthalten. Dies bedeutet, daß diese Anweisungen und dieses Wissen weitgehend domänenunabhängig, d. h. weitgehend unabhängig von Anwendungsgebieten, sind. Ein selbstentwickelndes Computersystem ist in der Lage, auf der Grundlage dieser Anweisungen und dieses Wissens elementare vollständige Anweisungen, die nicht in der Reflexionsbasis enthalten sind, und elementares exaktes Wissen über diese Anweisungen, das nicht in der Reflexionsbasis enthalten ist, in der Weise zu erzeugen, in der es neue Sachkenntnisse erzeugt. Ein selbstentwickelndes Computersystem ist in der Lage, Funktionswerte nichtberechenbarer Funktionen zu bestimmen, d. h. von Funktionen, die nicht durch vorgegebene Computerprogramme dargestellt werden können. Diese Bestimmung geschießt in der Weise, in der das System neue Sachkenntnisse einschließlich Computerprogrammen erzeugt. Ein selbstentwickelndes Computersystem kann die Richtigkeit neuer Sachkenntnisse nicht vollständig auf der Grundlage der vorhandenen Sachkenntnisse zeigen, sondern nur durch ihre Benutzung bestätigen, d. h. die neuen Sachkenntnisse in einem solchen System sind dem Irrtum unterworfen. Dies bedeutet, daß es in einem solchen System keine allgemeinen expliziten Kriterien gibt, wahre von falschen Aussagen zu unterscheiden. Ein selbstentwickelndes Computersystem kann ein Teilsystem eines beliebigen Computersystems sein. Es kann mehrere Reflexionsbasen in einem oder mehreren Speichern eines oder mehrerer Computersysteme enthalten und die Generierung neuen Wissens kann in mehreren Prozessen auf der Grundlage dieser Reflexionsbasen erfolgen. Ein selbstentwickelndes Computersystem kann ein besonderes Verfahren enthalten, das aus einer Beschreibung von Teilen von strukturierten Objekten die Menge aller Objekte konstruiert, auf die die Beschreibung zutrifft. Dieses Verfahren leitet aus der Beschreibung der Teile mit Hilfe von Schlußfolgerungen weitere Eigenschaften von Teilen dieser Objekte ab, erzeugt in Zwischenschritten Mengen, die Teile dieser Objekte enthalten, und generiert schließlich auf der Grundlage dieser Mengen die Menge aller Objekte, auf die die ursprüngliche Beschreibung zutrifft.

In einer Startphase werden Sachkenntnisse manuell in ein selbstentwickelndes Computersystem eingebracht bis das System in der Lage ist, sein Wissen auf der Grundlage von elementarerem Wissen zu verändern und zu erweitern und mit Hilfe seines veränderten und zu erweiterten Wissens Eingabesignale zu verarbeiten und als endgültiges Ergebnis Ausgabesignale zu erzeugen, wobei die Eingabe- und Ausgabesignale nur unvollständig durch Theorien erfaßbar zu sein brauchen.

KURZE BESCHREIBUNG DER ZEICHNUNGEN

Figur 1 zeigt das Zusammenwirken der wichtigsten Funktionseinheiten in einem Speicher eines selbstentwickelnden Computersystems.

Figur 2 zeigt beispielhaft die Struktur der Sachkenntnisse, die sich aus domänenspezifischen Kenntniskomponenten zusammensetzen.

Figur 3 zeigt beispielhaft die Struktur der in Figur 2 gezeigten Sachkenntnisse zu einem späteren Zeitpunkt.

Figur 4 zeigt die durch einen Rückkopplungsprozeß gesteuerte Entwicklung der Sachkenntnisse eines selbstentwickelnden Computersystems auf der Grundlage einer Reflexionsbasis.

BESTER WEG ZUR AUSFÜHRUNG DER ERFINDUNG

Im folgenden wird eine genaue Beschreibung der besten Ausführungsform der Erfindung gegeben. Selbstverständlich ist damit nicht beabsichtigt, die Erfindung auf diese Form zu beschränken, sondern die folgende Beschreibung soll vielmehr alle Modifikationen und Variationen der Erfindung abdecken, die gemäß den Ansprüchen dem Wesen der Erfindung entsprechen.

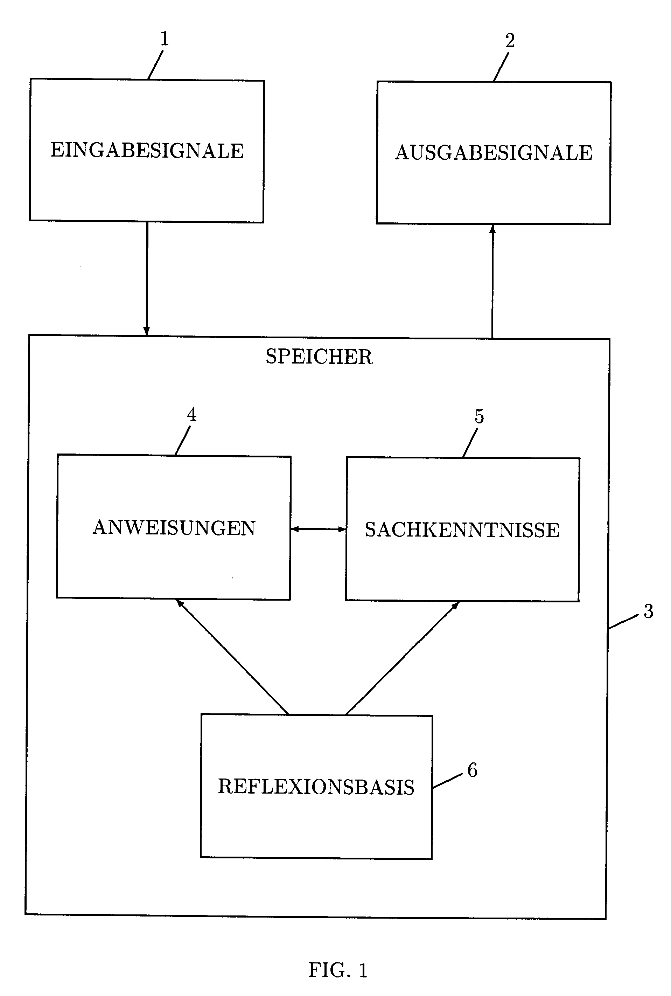

Figur 1 zeigt die wichtigsten Funktionseinheiten in einem Speicher 3 eines selbstentwickelnden Computersystems. Die Eingabesignale 1, die von Eingabegeräten oder anderen selbstentwickelnden Computersystemen übertragen werden, werden mit Hilfe des Wissens im Speicher 3 verarbeitet. Dabei werden Ausgabesignale 2 erzeugt, die an Ausgabegeräte oder andere Computersysteme übertragen werden. Die Eingabegeräte können zum Beispiel Tastaturen oder Sensoren sein und die Ausgabegeräte Drucker, Sichtgeräte oder Arme von Robotern. Der Speicher 3 enthält Folgen von elementaren vollständigen Anweisungen 4, d. h. diese Anweisungen können von herkömmlichen Prozessoren ausgeführt werden. Eine solche Anweisung kann zum Beispiel darin bestehen, aus einer Liste von Objekten eine neue Liste zu konstruieren, die die Objekte der ursprünglichen Liste in umgekehrter Reihenfolge enthält. Außerdem enthält der Speicher 3 Wissen, das sich aus Sachkenntnissen 5 und einer Reflexionsbasis 6 zusammensetzt. Die Sachkenntnisse 5 enthalten Wissen, das zu einem Anwendungsbereich gehört oder in ihm benutzt werden kann. Sachkenntnisse können zum Beispiel räumliches Wissen enthalten und Methoden, dieses Wissen für die Bewegung von Objekten einzusetzen. Die Sachkenntnisse 5 sind domänenspezifisch, d. h. ihre Strukturen werden weitgehend von ihren Anwendungsgebieten bestimmt. Ein Teil der Sachkenntnisse 5 kann in einer Form dargestellt sein, die Teilmengen natürlicher Sprachen ähnlich ist. Die Reflexionsbasis 6 enthält elementare vollständige Anweisungen und elementares exaktes Wissen über diese Anweisungen. Zum Beipiel kann die Reflexionsbasis 6 eine Anweisung enthalten, die die Objekte einer Liste umkehrt, und das Wissen, daß die zweimalige Anwendung dieser Anweisung auf eine Liste die ursprüngliche Liste produziert. Die Reflexionsbasis 6 kann weitgehend domänenunabhängig, d. h. weitgehend unabhängig von Anwendungsgebieten, sein, da es begrenzte Mengen von elementaren vollständigen Anweisungen gibt, auf deren Grundlage alle vollständigen Anweisungen repräsentiert werden können, und das elementare exakte Wissen über diese Anweisungen ebenfalls begrenzt ist.

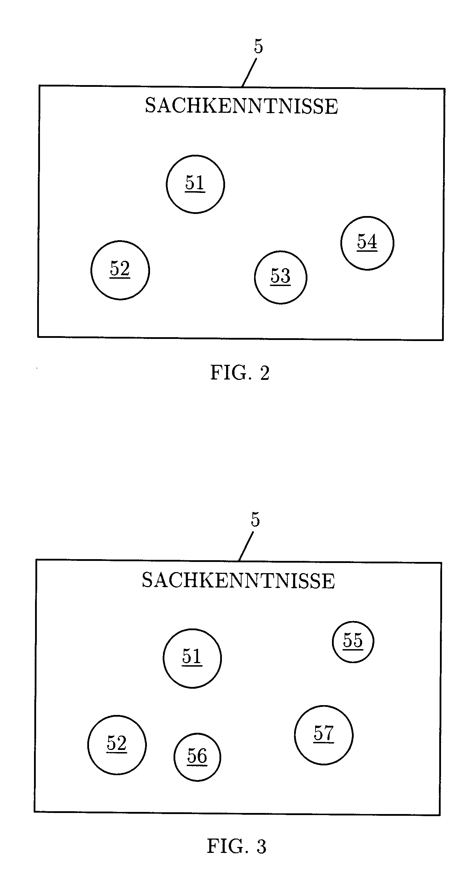

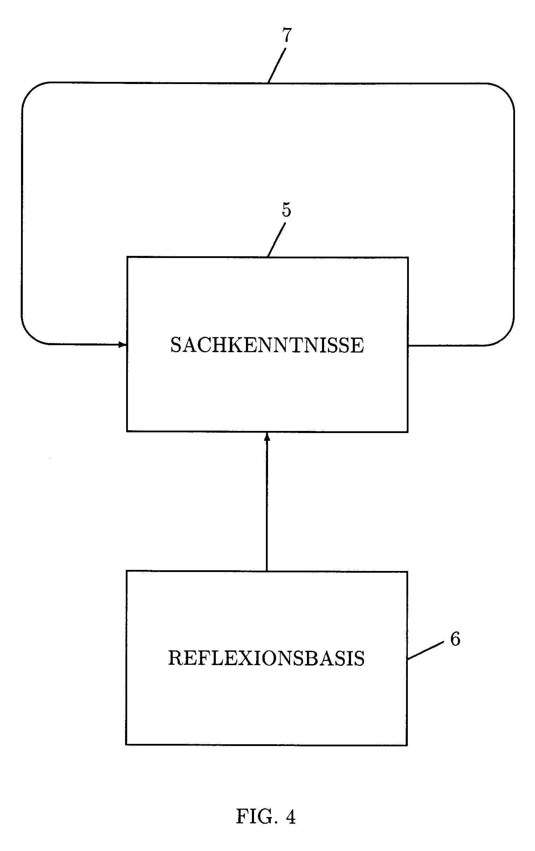

Die Funktionsweise eines selbstentwickelnden Computersystems besteht darin, daß die Eingabesignale 1 mit Hilfe der Sachkenntnisse 5 und der Reflexionsbasis 6 verarbeitet werden, wobei als endgültiges Ergebnis Ausgabesignale 2 erzeugt werden. Die Eingabe- und Ausgabesignale eines selbstentwickelnden Computersystems brauchen nicht vollständig durch Theorien erfaßbar zu sein. Die Verarbeitung der Eingabesignale 1 geschieht dadurch, daß auf der Grundlage der Sachkenntnisse 5 und der Reflexionsbasis 6 Folgen von elementaren vollständigen Anweisungen 4 erzeugt werden und dann ausgeführt werden. Die Ausführung dieser Anweisungen wird von den Sachkenntnissen 5 überwacht. Figur 2 zeigt beispielhaft die Struktur der Sachkenntnisse 5, die sich aus den domänenspezifischen Kenntniskomponenten 51, 52, 53 und 54 zusammensetzen, d. h. diese Komponenten gelten jeweils für bestimmte Teilbereiche des Anwendungsgebiets. Figur 4 veranschaulicht die Erzeugung neuer Sachkenntnisse 5. Ein selbstentwickelndes Computersystem verändert und erweitert seine Sachkenntnisse 5 in einem Rückkopplungsprozeß 7 auf der Grundlage vorhandener, elementarerer Sachkenntnisse 5. Diese Sachkenntnisse können in einem Rückkopplungsprozeß 7 wieder als Grundlage für ihre weitere Veränderung und Erweiterung verwendet werden. Somit verändert und erweitert ein selbstentwickelndes Computersystem seine Sachkenntnisse 5 nicht aufgrund vorgegebener, expliziter Verfahren oder fester Wissensbasen, sondern in einem Rückkopplungsprozeß 7 aufgrund elementarerer Sachkenntnisse. Sind für ein Anwendungsgebiet keine Sachkenntnisse vorhanden, so erzeugt ein selbstentwickelndes Computersystem auf der Grundlage der Reflexionsbasis 6 elementare Sachkenntnisse 5 für dieses Gebiet. Die Veränderungen und Erweiterungen der Sachkenntnisse 5 sind durch Teilungs- und Vereinheitlichungsprozesse von Kenntniskomponeneten gekennzeichnet. Figur 3 zeigt beispielhaft die Struktur der Sachkenntnisse 5 in Figur 2 zu einem späteren Zeitpunkt. Die Kenntniskomponenten 51 und 52 sind unverändert. Die Kenntniskomponenten 55, 56 und 57 sind neu, wobei die Kenntniskomponenten 55 und 56 das Ergebnis von Teilungsprozessen sind und die Kenntniskomponente 57 das Ergebnis eines Vereinheitlichungsprozesses ist. Die Kenntniskomponente 55 enthält elementare

EP 0 388 401 B1

Sachkenntnisse 5 über neue Eingabesignale. Ein selbstentwickelndes Computersystem erzeugt eine solche Kenntniskomponente, wenn für neue Eingabesignale keine Kenntniskomponenten vorhanden sind. Die Kenntniskomponente 56 enthält Teile der Kenntniskomponente 52. Eine solche Kenntniskomponente wird produziert. wenn für die Verarbeitung neuer Eingabesignale Teile einer vorhandenen Kenntniskomponente verwendet werden können. Die Kenntniskomponente 57 ist das Ergebnis einer Vereinheitlichung der Kenntniskomponenten 53 und 54. Die bei solchen Vereinheitlichungsprozessen entstehenden Kenntniskomponenten erfüllen mit höherer Effizienz die Funktion der Kenntniskomponenten, aus denen sie entstanden sind.

Im folgenden wird der Aufbau und die Funktionsweise eines selbstentwickelnden Computersystems an Hand eines Beispiels aus dem Gebiet der Mathematik erläutert. In diesem Beispiel wird beschrieben, wie ein selbstentwickelndes Computersystem einen Beweis für ein einfaches Theorem analysiert und dabei Sachkenntnisse erzeugt, die Methoden zur Konstruktion anderer Beweise enthalten. Somit zeigt dieses Beispiel, wie ein solches System durch die Verarbeitung von Eingabesignalen Sachkenntnisse erzeugt, die ihm die Lösung von Aufgaben gestattet, die es zuvor nicht lösen konnte. Die expliziten Strukturen mathematischer Beweise und der Funktion, die entscheidet, ob eine mathematische Aussage wahr oder falsch ist, sind nur unvollständig durch Theorien erfaßbar (K. Ammon, "The Automatic Development of Concepts and Methods", Dissertation, Universität Hamburg, 1988). Das Gebiet der Mathematik wurde gewählt, da es eine kompakte Veranschaulichung eines einfachen und leistungsfähigen selbstentwickelnden Computersystems gestattet.

*Mathematische Axiome und Theorem.* Das Beispiel gehört in das Gebiet der Gruppentheorie. Die hier verwendete Axiomatisierung der Gruppentherie verlangt, daß lineare Gleichungen Lösungen besitzen. Sie weicht somit von der üblichen Axiomatisierung ab, für die die Losbarkeit linearer Gleichungen ein Theorem ist. Eine Gruppe ist eine Menge, auf der drei zweistellige Operationen definiert sind, d. h. diese Operationen ordnen zwei Elementen dieser Menge ein weiteres zu. Die erste Operation heißt Gruppenoperation. Das zwei Elementen $x$ und $y$ zugeordneten Element wird für die Gruppenoperation mit $xy$, für die zweite Operation mit $g(x,y)$ und für die dritte Operation mit $h(x,y)$ bezeichnet. Für eine Gruppe gelten die folgenden mathematischen Axiome:

1. $(xy)z = x(yz)$

2. $g(x,y)x = y$

3. $xh(x,y) = y$

Ein Beispiel für eine Gruppe sind die rationalen Zahlen mit der Multiplikation als Gruppenoperation und den Operationen $g$ und $h$, die zwei rationalen Zahlen $z$ und $y$ die rationale Zahl $y/x$ zuordnen. Das Theorem ist: Für beliebige Elemente $a$ und $b$ einer Gruppe gilt die Gleichung

$$g(a,a)b = b.$$

Dieses Theorem impliziert, daß es in einer Gruppe ein linksneutrales Element gibt. In der maschinellen Darstellung der Axiome und des Theorems steht $(= x\ y)$ für die Gleichung $x = y$ und $(f\ x\ y),(g\ x\ y)$ und $(h\ x\ y)$ für die Terme $xy$, $g(x,y)$ und $h(x,y)$, wobei $x$ und $y$ Terme sind. Um die Lesbarkeit dieser Beschreibung zu verbessern, werden die Gleichungen, die man erhält, wenn man die linke und die rechte Seite der Axiome vertauscht, zu den Axiomen hinzugefügt. Somit sind die Axiome in maschineller Darstellung eine Menge

```
(menge  (= (f (f x y) z) (f x (f y z)))
        (= (f x (f y z)) (f (f x y) z))
        (= (f (g x y) x) y)
        (= y (f (g x y) x))
        (= (f x (h x y)) y)
        (= y (f x (h x y)))).
```

8

EP 0 388 401 B1

Die maschinelle Darstellung des Theorems ist

$$(= (f (g a a) b) b).$$

*Beweis*. Ein Beweis in herkömmlicher Darstellung für Theorem $g(a,a)b = b$, der aus vier Beweisschritten besteht, ist:

1. Wegen Axiom 3 gilt: $g(a,a)b = g(a,a)(ah(a,b))$.
2. Wegen Axiom 1 gilt: $g(a,a)(ah(a,b)) = (g(a,a)a)h(a,b)$.
3. Wegen Axiom 2 gilt: $(g(a,a)a)h(a,b) = ah(a,b)$.
4. Wegen Axiom 3 gilt: $ah(a,b) = b$.

Aufgrund der Transivität der Gleichheitsrelation ergibt sich aus den obigen Gleichungen die Gleichung $g(a,a)b = b$. Damit ist der Beweis fertig. Dieser Beweis in maschineller Darstellung ist

```
(tupel  (paar  (= (f (g a a) b) (f (g a a) (f a (h a b)))))
               (kettenregel  (f (g a a) b)
                             2
                             (= y (f x (h x y)))
                             (menge a/x b/y)))
        (paar  (= (f (g a a) (f a (h a b))) (f (f (g a a) a) (h a b)))
               (kettenregel  (f (g a a) (f a (h a b)))
                             ()
                             (= (f x (f y z)) (f (f x y) z))
                             (menge  (g a a)/x  a/y  (h a b)/z)))
        (paar  (= (f (f (g a a) a) (h a b)) (f a (h a b)))
               (kettenregel  (f (f (g a a) a) (h a b))
                             1
                             (= (f (g x y) x) y)
                             (menge a/x a/y))))
        (paar  (= (f a (h a b)) b)
               (kettenregel  (f a (h a b))
                             ()
                             (= (f x (h x y)) y)
                             (menge a/x b/y)))).
```

Der Beweis ist ein Tupel von vier Beweisschritten, die als Paare dargestellt sind. Das erste Element eines Beweisschrittes ist eine Gleichung und das zweite Element enthält die Schlußregel **kettenregel** und Argumente für diese Schlußregel. Die Gleichungen in den ersten Elementen der Beweisschritte sind die Gleichungen im oben angegebenen Beweis in herkömmlicher Darstellung. Das erste Argument der Schlußregel **kettenregel** im zweiten Element eines Beweisschrittes ist ein Term, das zweite Element ein Zeiger auf einen Teilterm dieses Terms, das dritte Argument eine Gleichung und das vierte Argument eine Substitution für die Variablen dieser Gleichung. Die Anwendung der Substitution auf die Gleichung ergibt eine Gleichung, deren linker Term gleich dem Teilterm des Terms im ersten Argument ist, auf den der Zeiger zeigt. Die Anwendung der Schlußregel **kettenregel** auf die Argumente ergibt eine Gleichung, deren linke Seite gleich dem Term im ersten Argument ist und deren rechte Seite erzeugt wird: wenn im Term im ersten Argument der Teilterm, auf den der Zeiger zeigt, durch die rechte Seite der Gleichung ersetzt wird, die sich durch die Anwendung der Substitution auf die Gleichung im dritten Argument ergibt. Ein Beispiel ist: Das erste Argument der Kettenregel im ersten Beweisschritt ist der Term **(f (g a a) b)**, das zweite Argument ist der Zeiger 2, der auf den Teilterm **b** dieses Terms zeigt, das dritte Argument ist die Gleichung **(= y (f x (h x y)))** und das vierte Argument die Substitution **(menge a/x b/y)**, die die Substitution des Elements **a** für die Variable **x** und des Elements **b** für die Variable **y** beschreibt. Die Anwendung dieser Substitution auf die Geichung im dritten Argument ergibt die Gleichung **(= b (f a (h a b)))**. Die Anwendung der Schlußregel **kettenregel** auf die angegebenen Argumente ergibt die Gleichung **(= (f (g a a) b) (f (g a a) (f a (h a b))))**.

9

*Methode*. Eine Methode, die ans den Axiomen und dem Theorem den Beweis erzeugt, ist die Funktion

```
(funktion methode (axiome theorem)
     (weise-zu teilbeweis den-wert '(tupel))
     (schleife
          (wenn    (enthält-beweis: theorem teilbeweis)
                   dann
                   (gebe-aus (extrahiere-beweis theorem teilbeweis)))
          (hänge-an teilbeweis die-elemente-von
               (letzte-nichtleere-menge
                    (kmenge    s
                               (und  (beweisschritt: s)
                                     (gleich: (arg '(2 0) s) 'kettenregel)
                                     (gleich: (arg '(2 1) s) (arg 1 theorem))
                                     (element: (arg '(2 3) s) axiome)
                                     (teilmenge:   (substituenten (arg '(2 4) s))
                                                   (variable theorem))))
                    (kmenge    s
                               (und  (beweisschritt: s)
                                     (gleich: (arg '(2 0) s) 'kettenregel)
                                     (element: (arg '(2 1) s) (projektion '(1 2) teilbeweis))
                                     (element: (arg '(2 3) s) axiome)
                                     (teilmenge:   (variable (arg 2 (arg '(2 3) s)))
                                                   (variable (arg 1 (arg '(2 3) s))))
                                     (nicht (element:   (arg '(1 2) s)
                                                        (projektion '(1 1) teilbeweis)))))))))).
```

Die Methode **methode** ist eine zweistellige Funktion, deren erstes Argument eine Menge von Axiomen **axiome** und deren zweites Argument ein Theorem **theorem** ist. Die Methode besteht aus einer **weise-zu** Form und einer **schleife** Form, die in der angegebenen Reihenfolge ausgeführt werden. Sie verwendet eine Variable **teilbeweis**, die ein Tupel von Beweisschritten enthält. Die **weise-zu** Form weist der Variablen **teilbeweis** als Wert das leere Tupel (**tupel**) zu. Die **schleife** Form besteht aus einer **wenn** Form und einer **hänge-an** Form, die in der angegebenen Reihenfolge ausgewertet werden bis die Bedingung im ersten Argument der **wenn** Form erfüllt ist. Diese Bedingung prüft, ob der Teilbeweis einen Beweis für das Theorem enthält, d. h. ob aufgrund der Transivität der Gleicheitsrelation aus den ersten Elementen der Beweisschritte im Teilbeweis das Theorem folgt. Der Doppelpunkt als letztes Zeichen eines Funktionsnamens bedeutet, daß die Funktion ein Prädikat ist, d. h. ihre Auswertung ergibt den Wert **wahr** oder **falsch**.

Ist die oben beschriebene Bedingung erfüllt, so löscht die Funktion **extrahiere-beweis** Beweisschritte, die nicht für den Beweis notwendig und somit überflüssig sind, und gibt als Ergebnis der Funktion **methode** den so erzeugten Beweis aus. Ist die in der **enthält-beweis:** Form angegebene Bedingung nicht erfüllt, so wird die **hänge-an** Form ausgeführt, die die Elemente der von der **letzte-nichtleere-menge** Form erzeugten Menge an den Teilbeweis anhängt. Die **letzte-nichtleere-menge** Form besteht aus zwei **kmenge** Formen, die die Menge aller Objekte konstruieren, die die in ihren zweiten Argumenten angegebenen Bedingungen erfüllen. Zuerst wird die zweite **kmenge** Form ausgeführt. Ergibt sie eine nichtleere Menge, so ist das Ergebnis der **letzte-nichtleere-menge** Form diese Menge. Andernfalls wird die erste **kmenge** Form ausgeführt und die dabei erzeugte Menge ist der Wert der **letzte-nichtleere-menge** Form. Die erste **kmenge** Form konstruiert die Menge aller Objekte **s**, die die folgenden Bedingungen erfüllen:

1. Das Objekt **s** ist ein Beweisschritt.

2. Die Schlußregel im zweiten Element des Beweisschrittes **s** ist die Kettenregel. (Eine genaue Definition der Funktion **arg** ist im Anhang angegeben.)

3. Das erste Argument der Kettenregel ist gleich dem ersten Argument des Theorems, d. h. gleich seiner linken Seite.

4. Das dritte Argument der Kettenregel ist ein Axiom.

5. Die Substituenten in der Substitution im vierten Argument der Kettenregel sind Variable, die im Theorem enthalten sind.

Vereinfacht gesagt erzeugt die erste **kmenge** Form die Menge aller Gleichungen, deren linke Seite gleich der linken Seite des Theorems ist und deren rechte Seiten aufgrund von Substitutionen erzeugt werden, deren Substituenten Variable sind, die im Theorem enthalten sind. Die zweite **kmenge** Form konstruiert die Menge aller Objekte **s**, die die folgenden Bedingungen erfüllen:

1. Das Objekt **s** ist ein Beweisschritt.

2. Die Schlußregel im zweiten Element des Beweisschrittes **s** ist die Kettenregel.

3. Das erste Argument der Kettenregel ist der zweite Term im ersten Argument eines Beweisschrittes im Teilbeweis. (Eine genaue Definition der Funktion **projektion** ist im Anhang angegeben.)

4. Das dritte Argument der Kettenregel ist ein Axiom.

5. Die Variablen im zweiten Argument der Gleichung im dritten Argument der Kettenregel sind im ersten Argument dieser Gleichung enthalten.

6. Das zweite Argument im ersten Element des Beweisschrittes **s** ist nicht das erste Argument im ersten Element eines Beweisschrittes im Teilbeweis.

Vereinfacht gesagt erzeugt die zweite **kmenge** Form die Menge aller Gleichungen, deren linke Seite die rechte Seite einer Gleichung im Teilbeweis ist und deren rechte Seite nicht länger als ihre linke Seite und nicht im Teilbeweis enthalten ist. Die Anwendung der Methode auf die Axiome und das Theorem ergibt achtzehn Beweisschritte, deren erste Elemente in der folgenden Tabelle angegeben sind:

| Erste **kmenge** Form | Zweite **kmenge** Form | | |
|---|---|---|---|
| $g(a,a)b = g(g(a,a)a,a)b$ | | | |
| $g(a,a)b = g(g(b,a)b,a)b$ | | | |
| $g(a,a)b = g(a,g(a,a)a)b$ | | | |
| $g(a,a)b = g(a,g(b,a)b)b$ | | | |
| $g(a,a)b = g(a.a)(g(a,b)a)$ | $... = (g(a,a)g(a,b))a$ | | |
| $g(a,a)b = g(a,a)(g(b,b)b)$ | $... = (g(a,a)g(b,b))b$ | | |
| $g(a,a)b = g(ah(a,a),a)b$ | | | |
| $g(a,a)b = g(bh(b,a),a)b$ | | | |
| $g(a,a)b = g(a,ah(a,a))b$ | | | |
| $g(a,a)b = g(a,bh(b,a))b$ | | | |
| $g(a,a)b = g(a,a)(ah(a,b))$ | $... = (g(a,a)a)h(a,b)$ | $... = ah(a,b)$ | $... = b$ |
| $g(a,a)b = g(a,a)(bh(b,b))$ | $... = (g(a,a)b)h(b,b)$ | | |

Die Punkte stehen jeweils für die rechten Seiten der Gleichungen in der gleichen Zeile der vorherigen Spalte. Die Gleichungen, die für den Beweis benötigt werden, sind unterstrichen. Die Gleichungen in der ersten Spalte werden von der ersten **kmenge** Form in der Methode erzeugt und die Gleichungen in den übrigen Spalten von der zweiten **kmenge** Form. Die ersten sechs Gleichungen in der ersten Spalte entstehen durch Anwendung des zweiten Axioms und die übrigen Gleichungen in der ersten Spalte durch Anwendung des dritten Axioms. Die Gleichungen in der zweiten Spalte entstehen durch Anwendung des ersten Axioms, die Gleichung in der dritten Spalte durch Anwendung des zweiten Axioms und die Gleichung in der vierten Spalte durch Anwendung des dritten Axioms. Die Konstruktion der achtzehn Beweisschritte durch die **kmenge** Formen in der Methode wird im nächsten Absatz beschrieben.

*Die* **kmenge** *Funktion.* Die **kmenge** Funktion ist eine zweistellige Funktion, deren erstes Argument eine Variable und deren zweites Argument eine Konjunktion ist, die diese Variable enthält. Sie konstruiert die Menge aller Objekte, die die Bedingungen in den Argumenten der Konjunktion erfüllen. Dies wird in drei Schritten erreicht. Im *ersten* Schritt werden Axiome in der Reflexionsbasis auf die Konjunktion angewandt, wodurch zusätzliche Bedingungen erzeugt werden. Im *zweiten* Schritt werden Elementrelationen zwischen Teilen der Objekte, die konstruiert werden sollen, und endlichen Mengen durch Gleichheitsrelationen zwischen diesen Teilen und Elementen dieser Mengen ersetzt. Im *dritten* Schritt werden die im zweiten Schritt erzeugten Konjunktionen ausgewertet. Sind Bedingungen in den Argumenten einer solchen Konjunktionen nicht erfüllt, wird diese Konjunktion gelöscht. Andernfalls wird ein Objekt konstruiert, das die in den Argumenten dieser Konjunktion angegebenen Bedingungen erfüllt. Die so konstruierten Objekte sind genau die Objekte, die die in den Argumenten der ursprünglichen Konjunktion angegebenen Bedingungen erfüllen. Im folgenden wird die Auswertung der ersten **kmenge** Form in der Methode beschrieben. Die Reflexionsbasis enthält die Axiome

```
(für-alle   x
            (wenn   (und   (beweisschritt: x)
                           (gleich: (arg '(2 0) x) 'kettenregel)
                    dann
                    (und   (term: (arg '(2 1) x))
                           (element: (arg '(2 2) x) (teilterm-zeiger (arg '(2 1) x)))
                           (gleichung: (arg '(2 3) x))
                           (substitution: (arg '(2 3) x) (arg '(2 4) x))
                           (gleich:   (arg (arg '(2 2) x) (arg '(2 1) x))
                                      (arg 1 (substituiere (arg '(2 3) x) (arg '(2 4) x))))
                           (gleich: (arg 1 s) (wende-an (arg 2 s))))))))
    und
            (für-alle   g s t m
                        (wenn   (und   (gleichung: g)
                                       (substitution: g s)
                                       (gleich: t (arg 1 (substituiere g s)))
                                       (teilmenge: (substituenten s) m))
                                dann
                                (element: s (erzeuge-substitutionen t g m))))).
```

Das erste Axiom beschreibt die Argumente der Schlußregel **kettenregel**. Außerdem gibt es an, daß das erste Element eines Beweisschrittes durch die Anwendung der Schlußregel auf die Argumente im zweiten Element erzeugt wird. Das zweite Axiom hat folgende Bedeutung: Ist **s** eine Substitution für die Variablen einer Gleichung **g**, **t** die linke Seite der Gleichung, die sich durch Anwendung von **s** auf **g** ergibt, und die Substituenten von **s** in einer Menge von Termen **m** enthalten, dann ist **s** in der Menge der Substitutionen erhalten, die dadurch erzeugt werden, daß die linke Seite von **g** gegen **t** gematched wird und die Variablen von **g**, die nicht in der sich ergebenden Substitution erhalten sind, durch die Terme in **m** gebunden werden. Zum Beispiel, ist der Wert von

**(erzeuge-substitutionen 'b '( = y (f x (h x y))) '(menge a b))**

die Menge von Substitutionen

**(menge (menge a/x b/y) (menge b/x b/y)).**

Die Anwendung der beiden Axiome auf die erste **kmenge** Form in der Methode ergibt die **kmenge** Form

```
(kmenge   s
          (und   (beweisschritt: s)
                 (gleich: (arg '(2 0) s) 'kettenregel)
                 (gleich: (arg '(2 1) s) (arg 1 theorem))
                 (element: (arg '(2 3) s) axiome)
                 (teilmenge: (substituenten (arg '(2 4) s)) (variable theorem))
                 (term: (arg '(2 1) s))
                 (element:   (arg '(2 2) s) (teilterm-zeiger (arg '(2 1) s)))
                 (gleichung: (arg '(2 3) s))
                 (substitution: (arg '(2 3) s) (arg '(2 4) s))
                 (gleich:   (arg (arg '(2 2) s) (arg '(2 1) s))
                            (arg 1 (substituiere (arg '(2 3) s) (arg '(2 4) s))))
                 (gleich: (arg 1 s) (wende-an (arg 2 s)))
                 (element:   (arg '(2 4) s)
                             (erzeuge-substitutionen   (arg (arg '(2 2) s) (arg '(2 1) s))
                                                       (arg '(2 3) s)
                                                       (variable theorem))))).
```

Die durch Anwendung der beiden Axiome in die Konjunktion eingefügten Argumente sind umrahmt. Der zweite Schritt ersetzt die drei Elementrelationen im vierten, siebenten und zwölften Argument der Konjunktion durch Gleichheitsrelationen mit den Elementen der entsprechenden Mengen. Zum Beispiel wird die erste Elementrelation

**(element: (arg '(2 3) s) axiome)**

zuerst durch die Geichheitsrelation

**(gleich: (arg '(2 3) s) '( = (f (f x y) z) (f x (f y z))))**

ersetzt. Der dritte Schritt wertet die Argumente der erzeugten Konjunktionen aus. Genau zwölf Konjunktionen enthalten keine Argumente, deren Wert falsch ist. Da sie sämtliche Teile von Beweisschritten beschreiben, kann aus ihnen direkt eine Menge von zwölf Beweisschritte erzeugt werden. Diese Menge ist der Wert der ersten **kmenge** Form in der Methode. Die Konstruktion der zweiten **kmenge** Form geschieht analog, wobei anstelle des zweiten Axioms das Axiom

```
(für-alle   g s t
            (wenn   (und   (gleichung: g)
                           (substitution: g s)
                           (gleich: t (arg 1 (substituiere g s)))
                           (teilmenge: (variable (arg 2 g)) (variable (arg 1 g)))
                    dann
                    (gleich: s (match t (arg 1 g)))))
```

verwendet wird. Es hat folgende Bedeutung: Ist s eine Substitution für die Variablen einer Gleichung **g**, **t** die linke Seite der Gleichung, die sich durch Anwendung von **s** auf **g** ergibt, und sind die Variablen der rechten Seite von **g** in der linken Seite von **g** enthalten, dann wird **s** dadurch erzeugt, daß die linke Seite von **g** gegen **t** gematched wird.

*Ein selbstentwickelndes Analyseverfahren*. Dieser Abschnitt beschreibt ein Analyseverfahren, das die Methode aus den Axiomen, dem Theorem und dem Beweis konstruiert. Die Beweisschritte des Beweises werden einzeln analysiert. Im folgenden bezeichne ich den Beweisschritt, der gerade analysiert wird, als den aktuellen Beweisschritt. Das Analyseverfahren ist ein Iterationsverfahren, dessen Iterationsvariablen ein Zeiger auf den aktuellen Beweisschritt, ein Teilbeweis und eine Teilmethode sind. Am Anfang ist der Zeiger 1, der Teilbeweis das leere Tupel **(tupel)** und die Teilmethode die Funktion

```
(funktion teilmethode (axiome theorem beweis zeiger)
    (weise-zu teilbeweis den-wert '(tupel))
    (schleife
        (wenn   (teilmenge: (bis-zum-nten beweis zeiger) teilbeweis)
                dann
                (gebe-aus teilbeweis))
        (hänge-an teilbeweis die-elemente-von
            (letzte-nichtleere-menge)))).
```

Die Argumente der Funktion **teilmethode** sind eine Menge von Axiomen, ein Theorem, ein Beweis und ein Zeiger auf einen Beweisschritt. Zuerst ordnet die Teilmethode der Variablen **teilbeweis** als Wert das leere Tupel **(tupel)** zu. Dann werden die **wenn** Form und die **hänge-an** Form in der angegebenen Reihenfolge wiederholt ausgeführt bis die Bedingung in der **wenn** Form erfüllt ist. Die **wenn** Form prüft, ob die Beweisschritte im Beweis bis zum Beweisschritt, auf den der Zeiger zeigt, im Teilbeweis enthalten sind. Ist dies der Fall, so wird der Teilbeweis ausgegeben. Andernfalls wird die **hängean** Form ausgeführt, die an den Teilbeweis die Elemente der von der **letzte-nichtleere-menge** Form erzeugten Menge anhängt. Damit sind die Anfangswerte der Iterationsvariablen beschrieben. Der Iterationsschritt, d. h. die Analyse eines einzelnen Beweisschrittes, hat sechs Stufen:

1. *Anwendung der Teilmethode*. Diese Stufe multipliziert die Auswertungszeit der Form

**(teilmethode axiome theorem beweis zeiger-1).**

wobei der wert der Variablen **zeiger-1** der um eins verminderte Wert des Zeigers ist, mit einer Zahl grösser als eins, zum Beispiel zwei oder vier, was ein Zeitintervall ergibt. Renn die Auswertung der Form

**(teilmethode axiome theorem beweis zeiger)**

innerhalb dieses Zeitintervalls eine Menge von Beweisschritten ergibt, die den akuellen Beweisschritt enthält, d. h. den Beweisschritt, auf den der Zeiger zeigt, so wird die sechste Stufe des Iterationsschrittes ausgeführt. Anderfalls wird die zweite Stufe ausgeführt.

2. *Elementare Analyse*. Diese Stufe konstruiert eine **kmenge** Form

```
(kmenge   s
          (und   (beweisschritt: s)
                 (gleich: (arg '(2 0) s) 'kettenregel)
                 ...)).
```

Die Argumente der Konjunktion werden aufgrund Von anfänglichen Fakten und Axiomen erzeugt. Diese Axiome sind in der Reflexionsbasis enthalten. Sie enthalten Regeln für die Konstruktion euer Fakten. Die Fakten bezeichnen die Klassenzugehörigkeit von Objekten. Ein Teil der Fakten bezeichnet Aussagen. Die anfänglichen Fakten sind die Argumente der Konjunktion in der obigen **kmenge** Form oder sie bezeichnen die Klassenzugehörigkeit der vorgegebenen Objekte. Ein Beispiel für ein anfängliches Faktum, das die Klassenzugehörigkeit eines vorgegeben Objekts bezeichnet, ist das Wissen, daß das vorgegebene Theorem eine Gleichung ist. Die Regeln beschreiben die Definitions- und Wertebereiche der elementaren Funktionen, die in **kmenge** Formen vorkommen können. Ein Beispiel für eine Regel ist das Wissen, daß die linke Seite einer Gleichung ein Term ist. Ein Beispiel für eine Regel, die eine Aussage bezeichnet, ist das Wissen, daß die Gleichheitsrelation zwischen zwei Termen eine Aussage bildet. Durch die Anwendung der Axiome in der Reflexionsbasis auf die vorhandenen Fakten werden Generationen von Fakten erzeugt, die jeweils zu den vorhandenen Fakten hinzugefügt werden. Die Aussagen, die durch Fakten einer Generation bezeichnet werden, werden folgendermaßen verarbeitet: Die Variable **s** in der Aussage wird durch den Beweisschritt, auf den der Zeiger zeigt, ersetzt und die sich dadurch ergebende Aussage wird ausgewertet: Ergibt sie den Wahrheitswert **falsch**, so wird die nächste Aussage, die durch ein Faktum bezeichnet wird, verarbeitet. Ergibt sie den Wahrheitswert **wahr**, so wird die Aussage an die Argumente der Konjunktion in der obigen **kmenge** Form angehängt. Ergibt die Auswertung der **kmenge** Form nach der Verarbeitung aller Aussagen eine Menge von Beweisschritten innerhalb eines vorgebenen Zeitintervalls, zum Beispiel innerhalb von zehn Minuten, wird die dritte Stufe des Iterationsschrittes ausgeführt. Andernfalls wird eine neue Generation von Fakten erzeugt.

3. *Vereinfachung*. Die Konjunktion in der **kmenge** Form, die von der vorhergehenden Stufe erzeugt wird, enthält unwesentliche Argumente. Daher multipliziert das System die Ausführungzeit dieser **kmenge** Form mit einer Zahl größer als eins, zum Beispiel zwei oder vier, was ein Zeitintervall ergibt. Dann entfernt es versuchsweise jeweils ein Argument der Konjunktion und wertet die sich ergebende **kmenge** Form aus. Wenn innerhalb des Zeitintervalls eine Menge von Beweisschritten erzeugt wird, wird das jeweilige Argument endgültig aus der Konjunktion entfernt. Somit erzeugt dieses Verfahren eine **kmenge** Form, von deren Konjunktion kein Argument entfernt werden kann,, d. h. die Konjunktion enthält schließlich nur wesentliche Argumente.

4. *Vereinheitlichung*. Wenn die Teilmethode keine **kmenge** Form enthält, wird die fünfte Stufe des Iterationsschrittes ausgeführt. Andernfalls versucht diese Stufe die **kmenge** Form, die in dritten Stufe produziert wurde und die letzte **kmenge** Form in der Teilmethode zu einer **kmenge** Form

```
(kmenge   s
          (und   (beweisschritt: s)
                 (gleich: (arg '(2 0) s) 'kettenregel)
                 ...))
```

zu vereinheitlichen, die die Funktion der beiden ursprünglichen **kmenge** Formen erfüllt. Zuerst wird der Wert der Form

**(teilmethode axiome theorem beweis zeiger-2),**

wobei der Wert der Variablen **zeiger-2** der um zwei verminderte Wert des Zeigers ist, der Variablen **teilbeweis** zugeordnet, d. h. diese Variable wird auf den Stand gesetzt, den sie bei der Analyse des Beweisschrittes vor dem aktuellen Beweisschritt hatte. Die Vereinheitlichung wird in drei Teilstufen erreicht:

(a) Es werden wie in der elementaren Analyse mit Hilfe der Axiome in der Reflexionsbasis Generationen von Fakten konstruiert. In Form von zusätzlichen anfänglichen Fakten wird dabei das Wissen verwendet, daß die Argumente der Konjunktionen in den beiden **kmenge** Formen, die vereinheitlicht werden sollen. Aussagen sind. Dann wird Teilstufe (b) ausgeführt.

(b) Die in Teilstufe (a) produzierten Fakten, die Aussagen bezeichnen, werden nacheinander verarbeitet. Sind keine solchen Fakten mehr vorhanden, wird gemäß Teilstufe (a) eine neue Generation von Fakten konstruiert. Die Verarbeitung dieser Fakten geschieht folgendermaßen: In der Aussage wird für die Variable **s** der Beweisschritt, der vor dem aktuellen Beweisschritt liegt, eingesetzt und die sich ergebende Aussage wird ausgewertet: Ergibt sie den Wahrheitswert **falsch**, wird die nächste Aussage verarbeitet, die durch ein Faktum bezeichnet wird. Ergibt sie den Wahrheitswert **wahr**, wird in der Aussage für die Variable **s** der aktuelle Beweisschritt eingesetzt und die sich ergebende Aussage ausgewertet: Ergibt sie den Wahrheitswert **falsch**, wird die nächste Aussage verarbeitet, die durch ein Faktum bezeichnet wird. Ergibt sie den Wahrheitswert **wahr**, wird die Aussage an die Argumente der Konjunktion in der obigen **kmenge** Form angehängt. Ergibt die Auswertung der **kmenge** Form innerhalb eines Zeitintervalls, zum Beispiel innerhalb von zehn Minuten, eine Menge von Beweisschritten, so wird diese Menge von Beweisschritten vorübergehend an den Teilbeweis angehängt. Ergibt die erneute Auswertung der **kmenge** Form innerhalb dieses Zeitintervalls eine Menge von Beweisschritten, die den aktuellen Beweisschritt enthält, so wird Teilstufe (c) ausgeführt. Andernfalls wird die nächste Aussage verarbeitet, die durch ein Faktum bezeichnet wird. Wenn die Ausführungszeit für diese Stufe die mit einer Zahl größer als eins multiplizierte Summe der Zeitspannen, die für die Konstruktion der beiden **kmenge** Formen benötigt wurden, die vereinheitlicht werden sollen, übersteigt, so wird die fünfte Stufe des Iterationsschrittes ausgeführt.

(c) Wie die Konjunktion in der **kmenge** Form, die in der elementaren Analyse erzeugt wird, enthält die Konjunktion in der **kmenge** Form, die in Teilstufe (b) erzeugt wird, unwesentliche Argumente. Daher multipliziert das System die Summe der Ausführungszeiten dieser **kmenge** Form und dieser **kmenge** Form, nachdem die durch die ihre erste Auswertung produzierten Beweisschritte vorübergehend an den Teilbeweis angehängt wurden, mit einer Zahl größer als eins, zum Beispiel zwei oder vier, was ein Zeitintervall ergibt. Dann entfernt es versuchsweise jeweils ein Argument der Konjunktion und wertet die sich ergebende **kmenge** Form aus. Wenn innerhalb des Zeitintervalls eine Menge von Beweisschritten erzeugt wird, werden diese Beweischritte vorübergehend an den Teilbeweis angehängt. Ergibt die erneute Auswertung der **kmenge** Form innerhalb des Zeitintervalls eine Menge von Beweisschritten, die den aktuellen Beweisschritt enthält, so wird das jeweilige Argument endgültig aus der Konjunktion entfernt. Somit erzeugt dieses Verfahren eine **kmenge** Form, von deren Konjunktion kein Argument entfernt werden kann, d. h. die Konjunktion enthält schließlich nur wesentliche Argumente. Sind alle Argumente in der Konjunktion der **kmenge** Form verarbeitet, wird die letzte **kmenge** Form in der Teilmethode durch diese **kmenge** Form ersetzt und die sechste Stufe des Iterationsschrittes ausgeführt.

5. *Teilung*. Die **kmenge** Form, die durch die dritte Stufe des Iterationsschrittes erzeugt wurde, wird als letztes Argument der **letzte-nichtleere-menge** Form in die Teilmethode eingefügt. Dann wird die sechste Stufe ausgeführt.

6. *Veränderung der übrigen Iterationsvariablen und Ende*. Wenn der Zeiger auf den letzten Beweisschritt des Beweises zeigt, wird die **wenn** Form in der Teilmethode durch die **wenn** Form in der Methode ersetzt, wodurch die Methode erzeugt wird. Andernfalls werden die Iterationsvariablen **teilbeweis** und **zeiger** verändert. Der Wert der Form

**(teilmethode axiome theorem beweis zeiger)**

wird der Variablen **teilbeweis** zugeordnet und der Wert der Variablen **zeiger** wird um eins erhöht. Dann wird die erste Stufe des Iterationsschrittes wiederholt.

Die Steuerung des Analyseverfahrens durch Zeitintervalle dient der automatischen Adaption dieses Verfahrens an die Komplexität des Beweises.

*Eine Spur des Analyseprozesses*. Dieser Absatz beschreibt eine Spur des Analyseprozesses, die durch die Anwendung dem selbstentwickelnden Analyseverfahrens auf die Axiome, das Theorem und den Beweis erzeugt wird:

1. *Eine elementare Analyse*. Die Anwendung der anfänglichen Methode auf die Axiome, das Theorem, den Beweis und den Zeiger 1 ergibt das leere Tupel. Daher wird eine elementare Analyse des ersten Beweischrittes durchgeführt. Die elementare Analyse und die Vereinfachungsstufe für den ersten Beweisschritt ergeben eine **kmenge** Form, die mit der ersten **kmenge** Form in der Methode identisch ist. Im folgenden wird die Erzeugung des dritten Arguments

**(gleich: (arg '(2 1) s) (arg 1 theorem))**

in der Konjunktion dieser **kmenge** Form beschrieben. Ein anfängliches Faktum ist

(gleichung: theorem),

was bedeutet, daß das Theorem eine Gleichung ist. Durch Anwendung des ersten Axioms in der Reflexionsbasis, das die Argumente der Schlußregel **ketttenregel** beschreibt, auf die anfänglichen Fakten wird unter anderem das Faktum

**(term: (arg '(2 1) s))**

erzeugt, was bedeutet, daß das erste Argument der Kettenregel in einem Beweischritt **s** ein Term ist. Die Reflexionsbasis enthält die Regel

```
(für-alle   x
            (wenn   (gleichung: x)
                    dann
                    (term: (arg 1 x)))),
```

was bedeutet, daß die linke Seite einer Gleichung ein Term ist. Diese Regel wird auf das Faktum **(gleichung: theorem)** angewandt, was das Faktum

**(term: (arg 1 theorem))**

ergibt. Die Reflexionsbasis enthält außerdem die Regel

```
(für-alle   x y
            (wenn   (und (term: x) (term: y))
                    dann
                    (aussage: (gleich: x y)))),
```

was bedeutet, daß die Gleichheitsrelation zwischen zwei Termen eine Aussage bildet. Die Anwendung dieser Regel auf die oben angegebenen Fakten, die Terme bezeichnen, ergibt das Faktum

**(aussage: (gleich: (arg '(2 1) s) (arg 1 theorem))),**

das die Aussage

**(gleich: (arg '(2 1) s) (arg 1 theorem))**

bezeichnet. In dieser Aussage wird der erste Beweisschritt für die Variable **s** eingesetzt. Die Auswertung der sich ergebenden Aussage produziert den Wahrheiswert **wahr**, so daß diese Aussage an die Argumente der Konjunktion in der **kmenge** Form angehängt wird.

2. *Ein Vereinfachungsprozeß*. Die Konjunktion in der **kmenge** Form, die durch die elementare Analyse erzeugt wird, enthält unwesentliche Argumente, zum Beispiel das Argument

**(gleich: (arg 1 theorem) (arg 1 theorem)),**

was bedeutet, daß die linke Seite des Theorems mit sich selbst gleich ist. Die Löschung solcher Argumente erzeugt die erste **kmenge** Form in der Methode. Diese **kmenge** Form wird als Argument der **letzte-nichtleere-menge** Form in die anfängliche Teilmethode eingefügt.

3. *Ein Teilungsprozeß*. Die Anwendung der sich ergebenden Teilmethode auf die Axiome, das Theorem, den Beweis und den Zeiger 2 erzeugt nicht den zweiten Beweisschritt. Die elementare Analyse und der Vereinfachungsschritt für den zweiten Beweisschritt ergeben die **kmenge** Form

```
(kmenge   s
          (und   (beweisschritt: s)
                 (gleich: (arg '(2 0) s) 'kettenregel)
                 (element: (arg '(2 1) s) (projektion '(1 2) teilbeweis))
                 (element: (arg '(2 3) s) axiome)
                 (gleiche-menge:   (variable (arg 2 (arg '(2 3) s)))
                                   (variable (arg 1 (arg '(2 3) s))))))).
```

Da die Vereinheitlichungsstufe versagt, wird diese **kmenge** Form als letztes Argument in die **letzte-nichtleere-menge** Form eingefügt.

4. *Ein Vereinheitlichungsprozeß*. Die Anwendung der sich ergebenden Teilmethode auf die Axiome, das Theorem, den Beweis und den Zeiger 3 produziert nicht den dritten Beweisschritt. Die elementare Analyse und der Vereinfachungsschritt für den dritten Beweisschritt ergeben eine **kmenge** Form, die mit der zweiten **kmenge** Form in der Methode identisch ist. Die Vereinheitlichung dieser **kmenge** Form mit der zweiten **kmenge** Form in der Teilmethode ergibt wieder diese **kmenge** Form, da die Substitution

16

des zweiten Beweisschrittes für die Variable **s** in den Argumenten

$$(\text{teilmenge: } (\text{variable } (\text{arg } 2 \ (\text{arg } '(2\ 3)\ s)))$$
$$(\text{variable } (\text{arg } 1 \ (\text{arg } '(2\ 3)\ s)))))$$

und

$$(\text{nicht } (\text{element: } (\text{arg } '(1\ 2)\ s)$$
$$(\text{projektion } '(1\ 1)\ \text{teilbeweis})))$$

in der Konjunktion dieser **kmenge** Form Aussagen produziert, deren Auswertung den Wahrheitswert wahr ergibt. Somit wird die zweite **kmenge** Form in der Teilmethode durch diese **kmenge** Form ersetzt.
5. *Eine erfolgreiche Anwendung der Teilmethode.* Die Anwendung der sich ergebenden Teilmethode auf die Axiome, das Theorem, den Beweis und den Zeiger 4 produziert den vierten Beweisschritt. Die Ersetzung der wenn Form in der Teilmethode durch die wenn Form in der Methode ergibt die Methode. Wird in der Vereinfachungsstufe für den zweiten Beweisschritt das Argument

$$(\text{gleiche-menge: } (\text{variable } (\text{arg } 2 \ (\text{arg } '(2\ 3)\ s)))$$
$$(\text{variable } (\text{arg } 1 \ (\text{arg } '(2\ 3)\ s)))))$$

vor dem Argument

$$(\text{teilmenge: } (\text{variable } (\text{arg } 2 \ (\text{arg } '(2\ 3)\ s)))$$
$$(\text{variable } (\text{arg } 1 \ (\text{arg } '(2\ 3)\ s)))))$$

gelöscht, so wird diese **teilmenge**: Form anstelle der **gleiche-menge**: Form in der Konjunktion der **kmenge** Form verwendet. Die sich dann ergebende Teilmethode erzeugt alle Beweisschritte des Beweises, so daß in diesem Fall kein Vereinheitlichungsprozeß erforderlich ist. Werden anstelle der Mengen der Variablen in der linken und rechten Seite des Axioms die Längen der linken und rechten Seite verglichen, produziert das selbstentwickelnde Analyseverfahren für den zweiten Beweisschritt das Argument

$$(\text{gleich: } (\text{länge } (\text{arg } 2 \ (\text{arg } '(2\ 3)\ s)))$$
$$(\text{länge } (\text{arg } 1 \ (\text{arg } '(2\ 3)\ s)))))$$

und für den dritten Beweisschritt das Argument

$$(\text{kleiner: } (\text{länge } (\text{arg } 2 \ (\text{arg } '(2\ 3)\ s)))$$
$$(\text{länge } (\text{arg } 1 \ (\text{arg } '(2\ 3)\ s))))).$$

In der Vereinheitlichungsstufe entsteht dann als Argument in der Konjunktion der **kmenge** Form die Disjunktion dieser Argumente

$$(\text{oder} \quad (\text{gleich:} \quad (\text{länge (arg 2 (arg '(2 3) s)))}$$
$$(\text{länge (arg 1 (arg '(2 3) s))))}$$
$$(\text{kleiner:} \quad (\text{länge (arg 2 (arg '(2 3) s)))}$$
$$(\text{länge (arg 1 (arg '(2 3) s)))))).}$$

Die Anwendung des Analyseverfahrens auf den Beweis, der aus dem obigen Beweis durch Vertauschung der linken und rechten Seiten der Gleichungen und Umkehrung der Reihenfolge der Beweisschritte entsteht, produziert eine Methode, die der oben wiedergegebenen ähnlich ist. Diese drei Varianten der Beweisanalyse veranschaulichen die Robustheit des selbstentwickelnden Analyseverfahrens.

*Anwendungen der Methode.* Die Anwendung einfacher Variationen der Methode auf andere Axiomensysteme und andere Theoreme der Gruppentheorie, wie sie in Lehrbüchern der höheren Mathematik zu finden sind, produziert Beweise für diese Theoreme. Beispiele für solche Theoreme sind das Theorem, daß es in einer Gruppe nur ein neutrales Element gibt, daß das inverse Element eines Elements eindeutig bestimmt ist und daß das inverse Element des inversen Elements eines Elements wieder dieses Element ergibt. Einfache Variationen der Methode sind auch geeignet, Beweise für wesentlich schwierigere Theoreme zu produzieren die aus anderen mathematischen Theorien, zum Beispiel der Verbandstheorie, stammen können (K. Ammon. "The Automatic Development of Concepts and Methods", Dissertation, Universität Hamburg, 1988). Einige dieser Variationen können dadurch automatisch generiert werden, daß Argumente aus Konjunktionen in **kmenge** Formen in die Konjunktionen von anderen **kmenge** Formen eingefügt werden. Allgemein können diese Variationen auf der Grundlage von Methoden konstruiert werden, die durch eine Analyse einfacher Beweise erzeugt werden können.

Ein wichtiger Aspekt des beschriebenen Beispiels eines selbstentwickelnden Computersystems besteht darin, daß die Methode eine vollständige Anweisung, also ein Computerprogramm, darstellt. Sie setzt sich aus elementaren vollständigen Anweisungen, d. h. elementaren Programmen wie der Teilmengenrelation, zusammen. Diese Methode wird auf der Grundlage dieser elementaren Programme und ihren Definitions- und Wertebereichen. d. h. von elementarem exakten Wissen über diese elementaren Programme, erzeugt. Somit kann ein selbstentwickelndes Computersystem auch elementare vollständige Anweisungen und elementares exaktes Wissen über diese Anweisungen, die nicht in der Reflexionsbasis enthalten sind, in der Weise erzeugen, in der es neue Sachkenntnisse erzeugt. Diese Fähigkeit eines solchen Systems ist dann besonders umfassend, wenn die Reflexionsbasis einen universellen Satz von elementaren vollständigen Anweisungen, auf deren Grundlage alle vollständigen Anweisungen repräsentiert werden können, und elementares exaktes Wissen über diese Anweisungen enthält. Es ist bekannt, daß die Funktion, die bestimmt, ob ein Computerprogramm die Menge der natürlichen Zahlen in sich abbildet, nicht berechenbar ist, d. h. es gibt kein festes Computerprogramm, das diese Funktion repräsentiert. Wenn die Reflexionsbasis eines selbstentwickelndes Computersystem einen universellen Satz von elementaren vollständigen Anweisungen und elementares exaktes Wissen über diese Anweisungen enthält, so ist das System in der Lage, in der oben beschriebenen Weise Computerprogramme zu konstruieren, die die Menge der natürlichen Zahlen in sich abbilden. Somit ist ein selbstentwickelndes Computersystem in der Lage, Funktionswerte nichtberechenbarer Funktionen in der Weise zu bestimmen, in der es neue Sachkenntnisse erzeugt.

Das beschriebene Beispiel ist ein einfaches selbstentwickelndes Computersystem, das wesentliche Prozesse einem solchen System veranschaulicht. Die **kmenge** in diesem Beispiel sind einfache Kenntniskomponenten. Es enthält keine Teilungsprozesse bestehender Kenntniskomponenten. Solche Prozesse können entstehen, wenn eine **kmenge** Form erst nach Löschung von Argumenten in ihrer Konjunktion den Beweisschritt produziert, der analysiert werden soll. Da in diesem Beispiel Axiome, Theoreme und Beweise als allgemeine Signale, die nur unvollständig durch Theorien erfaßbar zu sein brauchen, verarbeitet werden und die Aufgabe, einen Beweis zu konstruieren somit die allgemeine Aufgabe zur Konstruktion von Signalen bedeutet, kann das selbstentwickelnde Analyseverfahren auf andere Gebiete übertragen werden. Die in diesem Verfahren enthaltenen Stufen wie elementare Analyse, Vereinfachung, Vereinheitlichung oder Teilung können für die Analyse komplexer Signale ineinander verwoben und differenzierter sein.

Selbstentwickelnde Computersysteme sind in der Lage, Beweise für signifikante Sätze aus der höheren Mathematik zu erzeugen, deren Darstellung der großenteils natürlich-sprachlichen Darstellung von Beweisen in Lehrbüchern sehr ähnlich ist. Beweise für den schwierigen Satz, daß in einem Ring aus $x^3 = x$ die Kommutativität der Multiplikation folgt, und den Banachschen Fixpunktsatz, einen der kraftvollsten Sätze der höheren Analysis, können von selbstentwickelnden Computersystemen auf der Grundlage Von elementaren Operatoren erzeugt werden, die mit den **kmenge** Formen in der Methode vergleichbar sind und die durch eine Analyse einfacher Beweise konstruiert werden können (K. Ammon, "The Automatic Development of

EP 0 388 401 B1

Concepts and Methods", Dissertation, Universität Hamburg, 1988; K. Ammon, "Discovering a proof for the fixed point theorem: A case study", Proceedings of the Eighth European Conference on Artificial Intelligence, Munich, August 1985, Pitman, London, England). Die Tatsache, daß Beweise Für diese Sätze auf handelsüblichen Personalcomputern erzeugt werden können, zeigt die Leistungsfähigkeit und Wirtschaftlichkeit selbstentwickelnder Computersystyeme. Selbstentwickelnde Computersysteme sind benutzerfreundlich, da ihre Benutzerschnittstellen nur unvollständig durch Theorien erlaßbar zu sein brauchen und der natürlichsprachlichen Kommunikation ähnlich sein können.

Selbstentwickelnde Computersysteme sind nicht auf die beschriebene Form beschränkt, sondern die Erfindung umfaßt vielmehr alle Modifikationen und Variationen, die gemäß den Ansprüchen dem Wesen der Erfindung entsprechen. Entscheidend ist, daß selbstentwickelnde Computersysteme aus elementarerem Wissen neues, leistungsfähigeres Wissen erzeugen. Dieses Wissen kann außer Beweisen zum Beispiel Programme, Methoden, Theorien, physische Objekte, oder Bewegungen von Robotern enthalten. Dabei ist jede vorgegebene explizite Beschreibung der Mechanismen, die in einem solchen Computersystem in einem Rückkopplungsprozeß neues Wissen produzieren, elementar.

GEWERBLICHE VERWERTUNG

Mögliche Anwendungsgebiete selbstentwickelnder Computersysteme sind Gebiete, die nicht vollständig durch Theorien erfaßt werden können und somit eine automatische Konstruktion neuen Wissens erforderlich machen. Das neue Wissen entsteht durch eine Analyse des Anwendungsgebiets und versetzt ein solches System in die Lage, neue, schwierigere Aufgaben zu bewältigen. Beispiele für Anwendungsgebiete sind die Konstruktion von Beweisen in wissensbasierten Systemen, die Konstruktion 5 von Computerprogrammen oder die Steuerung Von Bewegungen von Robotern.

ANHANG

*Definition 1.* Die **arg** Funktion ist eine zweistellige Funktion, deren erstes Argument ein Zeiger (Definition 3) und deren zweites Argument eine funktionale Form ist, d. h. eine Funktion und Argumente für diese Funktion. Der Wert einer Form $(\text{arg } '() \, x)$ ist $x$ und der Wert von $(\text{arg } '(\ldots \, n) \, x)$, wobei $n$ eine natürliche Zahl größer oder gleich null ist, ist das $n$-te Argument des Werts von $(\text{arg } '(\ldots) \, x)$, wobei die Punkte dieselbe Folge von Zahlen darstellen und das nullte Argument einer Form der Name der Funktion dieser Form ist. Für $(\text{arg } '(n) \, x)$ steht $(\text{arg } n \, x)$. Beispiele: Der Wert von $(\text{arg } '() \, '(f \, a \, b))$ ist $(f \, a \, b)$, der Wert von $(\text{arg } 0 \, '(f \, a \, b))$ ist $f$, der Wert von $(\text{arg } 1 \, '(f \, a \, b))$ ist $a$ und der Wert von $(\text{arg } '(2 \, 1) \, '(f \, a \, (g \, b \, c)))$ ist $b$.

*Definition 2.* Die **projektion** Funktion ist eine zweistellige Funktion, deren erstes Argument ein Zeiger (Definition 3) ist und deren zweites Argument eine funktionale Form ist. Sie wendet die **arg** Funktion auf den Zeiger in ihrem ersten Argument und die Argumente der Form in ihrem zweiten Argument an, was eine Menge von Objekten produziert. Beispiel: Der Wert der Form

```
(projektion   '(1 2)
              (tupel  (paar (= a b) ...)
                      (paar (= c d) ...)))
```

ist **(menge b d)**.

*Definition 3.* Ein *Zeiger* ist (), eine natürliche Zahl, die größer oder gleich null ist, oder eine Liste von natürlichen Zahlen. Beispiele: (). 0. 1. 2. (0 1). (1 1). (2 1).

19

**Patentansprüche**

1. Computersystem, das einen Speicher (3) zur Speicherung von Wissen, das Sachkenntnisse (5) enthält, umfaßt, mit Hilfe des Wissens Eingabesignale (1) verarbeitet und als endgültiges Ergebnis Ausgabesignale (2), die Informationen repräsentieren, erzeugt, dabei Anweisungen (4) generiert, die sich aus elementaren vollständigen Anweisungen einer Programmiersprache zusammensetzen, und die Ausführung dieser Anweisungen (4) mit Hilfe der Sachkenntnisse (5) überwacht, dadurch gekennzeichnet,

    daß die Informationen in den Eingabe- und Ausgabesignalen (1, 2) einschließlich deren Beziehungen nur unvollständig durch Theorien erfaßbar zu sein brauchen,

    daß das Wissen im Speicher (3) eine Reflexionsbasis (6) enthält, die elementare vollständige Anweisungen einer Programmiersprache, die von herkömmlichen Prozessoren ausführbar sind, und elementares exaktes Wissen über diese Anweisungen enthält,

    daß dieses Computersystem die Sachkenntnisse (5) verändert und erweitert aufgrund einer Analyse eines Anwendungsgebiets` die sich in einem Rückkopplungsprozeß (7) auf elementarere Sachkenntnisse (5), die es selbst erzeugt hat, und die Reflexionsbasis (6) stützt, wobei elementareres Wissen in den Sachkenntnissen (5) und der Reflexionsbasis (6) oder Variationen dieses Wissens die wesentlichen Bestandteile des veränderten und erweiterten Wissens liefern, und

    daß somit dieses Computersystem Mechanismen, die die Sachkenntnisse (5) verändern und erweitern, in einem Rückkopplungsprozeß (7) selbst erzeugt und jede vorgegebene explizite Beschreibung dieser Mechanismen nur elementare Sachkenntnisse (5) und elementares Wissen aus der Reflexionsbasis (6) enthält.

2. Verfahren zur Steuerung eines einen Speicher (3) zur Speicherung von Wissen, das Sachkenntnisse (5) enthält, umfassenden Computers, das mit Hilfe des Wissens Eingabesignale (1) verarbeitet und als endgültiges Ergebnis Ausgabesignale (2), die Informationen repräsentieren, erzeugt, dabei Anweisungen (4) generiert, die sich aus elementaren vollständigen Anweisungen einer Programmiersprache zusammensetzen, und die Ausführung dieser Anweisungen (4) mit Hilfe der Sachkenntnisse (5) überwacht, dadurch gekennzeichnet,

    daß die Informationen in den Eingabe- und Ausgabesignalen (1, 2) einschließlich deren Beziehungen nur unvollständig durch Theorien erfaßbar zu sein brauchen,

    daß das Wissen im Speicher (3) eine Reflexionsbasis (6) enthält, die elementare vollständige Anweisungen einer Programmiersprache, die von herkömmlichen Prozessoren ausführbar sind, und elementares exaktes Wissen über diese Anweisungen enthält,

    daß dieses Verfahren die Sachkenntnisse (5) verändert und erweitert aufgrund einer Analyse eines Anwendungsgebiets` die sich in einem Rückkopplungsprozeß (7) auf elementarere Sachkenntnisse (5), die es selbst erzeugt hat, und die Reflexionsbasis (6) stützt, wobei elementareres Wissen in den Sachkenntnissen (5) und der Reflexionsbasis (6) oder Variationen dieses Wissens die Wesentlichen Bestandteile des veränderten und erweiterten Wissens liefern, und

    daß somit dieses Verfahren Mechanismen, die die Sachkenntnisse (5) verändern und erweitern in einem Rückkopplungsprozeß (7) selbst erzeugt und jede vorgegebene explizite Beschreibung dieser Mechanismen nur elementare Sachkenntnisse (5) und elementares Wissen aus der Reflexionsbasis (6) enthält.

3. Computersystem nach Anspruch 1 oder Verfahren nach Anspruch 2, dadurch gekennzeichnet, daß es mit Hilfe der Reflexionsbasis (6) elementare Sachkenntnisse (5) für Eingabesignale (1) erzeugt, für die keine Sachkenntnisse vorhanden sind.

4. Computersystem nach Anspruch 1 oder Verfahren nach Anspruch 2, dadurch gekennzeichnet, daß sich die Sachkenntnisse (5) aus domänenspezifischen Kenntniskomponenten zusammensetzen und sich durch Teilungs- und Vereinheitlichungsprozesse dieser Kenntniskomponenten verändern und erweitern.

5. Computersystem nach Anspruch 1 oder Verfahren nach Anspruch 2, dadurch gekennzeichnet, daß die Prozesse, die die Sachkenntnisse (5) verändern und erweitern, Vereinfachungsprozesse enthalten, die wesentliche Sachkenntnisse herausfiltern.

6. Computersystem nach Anspruch 1 oder Verfahren nach Anspruch 2, dadurch gekennzeichnet, daß es die Tendenz besitzt, die Sachkenntnisse (5) so zu verändern und zu erweitern, daß sich der Umfang der Betriebsmittel, der zur Lösung von Aufgaben erforderlich ist, Verringert und die Erzeugung neuer Sachkenntnisse (5) in diesem Computersystem somit dem Prinzip der Ökonomie gehorcht.

**7.** Computersystem nach Anspruch 1 oder Verfahren nach Anspruch 2, dadurch gekennzeichnet, daß es mit Hilfe von elementareren Sachkenntnissen (5) und der Reflexionsbasis (6) Variationen neuer Sachkenntnisse (5) erzeugt und dann die Variationen, die die größte Leistungsfähigkeit besitzen, auswählt.

**8.** Computersystem nach Anspruch 1 oder Verfahren nach Anspruch 2, dadurch gekennzeichnet, daß die Reflexionsbasis (6) in der Weise verändert und erweitert wird, in der die Sachkenntnisse (5) verändert und erweitert werden, wobei elementareres Wissen in der Reflexionsbasis (6) die Funktion der Reflexionsbasis (6) übernimmt und das veränderte und erweiterte Wissen der Reflexionsbasis (6) die Funktion der Sachkenntnisse (5).

**9.** Computersystem nach Anspruch 1 oder Verfahren nach Anspruch 2, dadurch gekennzeichnet, daß die Reflexionsbasis (6) einen universellen Satz von elementaren vollständigen Anweisungen, auf deren Grundlage alle vollständigen Anweisungen repräsentiert werden können, und elementares exaktes Wissen über diese Anweisungen enthält.

**10.** Computersystem nach Anspruch 1 oder Verfahren nach Anspruch 2, dadurch gekennzeichnet, daß es in der Lage ist, Funktionswerte nichtberechenbarer Funktionen in der Weise zu bestimmen, in der es neue Sachkenntnisse (5) erzeugt.

**11.** Computersystem nach Anspruch 1 oder Verfahren nach Anspruch 2, dadurch gekennzeichnet, daß es die Richtigkeit neuer Sachkenntnisse (5) nicht vollständig mit Hilfe seiner bisherigen Sachkenntnisse (5) zeigen kann, sondern ihre Richtigkeit dem Irrtum unterworfen ist und nur durch ihre Benutzung bestätigt werden kann.

**12.** Computersystem nach Anspruch 1 oder Verfahren nach Anspruch 2, dadurch gekennzeichnet, daß es mehrere Reflexionsbasen (6) enthält und die Generierung neuer Sachkenntnisse (5) in mehreren Prozessen auf der Grundlage dieser Reflexionsbasen erfolgt.

**Claims**

**1.** A computer system having a memory (3) for storing knowledge including special knowledge (5), by means of the knowledge processing input signals (1) and, as a final result, generating output signals (2), wherein the signals represent information, in this process generating instructions (4) consisting of elementary complete instructions of a programming language, and controlling the execution of these instructions (4) by means of the special knowledge (5), characterized in that

the information in the input and output signals (1, 2) including their relations need not be completely coverable by theories,

the knowledge in the memory (3) includes a reflection base (6) containing elementary complete instructions of a programming language, which can be executed by conventional processors, and elementary exact knowledge about these instructions,

this computer system changes and extends the special knowledge (5) by means of an analysis of a field of application which is in an feedback process (7) based on more elementary special knowledge (5) the system itself has generated and on the reflection base (6), wherein more elementary knowledge in the special knowledge (5) and the reflection base (6) or variations of this knowledge form the essential components of the changed and extended knowledge, and

thus this computer system itself, in a feedback process (7), generates mechanisms changing and extending the special knowledge (5) and every given explicit description of these mechanisms only contains elementary special knowledge (5) and elementary knowledge of the reflection base (6).

**2.** A process for controlling a computer having a memory (3) for storing knowledge including special knowledge (5), by means of the knowledge processing input signals (1) and, as a final result, generating output signals (2), wherein the signals represent information, in this process generating instructions (4) consisting of elementary complete instructions of a programming language, and controlling the execution of these instructions (4) by means of the special knowledge (5), characterized in that

EP 0 388 401 B1

the information in the input and output signals (1, 2) including their relations need not be completely coverable by theories,

the knowledge in the memory (3) includes a reflection base (6) containing elementary complete instructions of a programming language, which can be executed by conventional processors, and elementary exact knowledge about these instructions,

this process changes and extends the special knowledge (5) by means of an analysis of a field of application which is in an feedback process (7) based on more elementary special knowledge (5) the process itself has generated and on the reflection base (6), wherein more elementary knowledge in the special knowledge (5) and the reflection base (6) or variations of this knowledge form the essential components of the changed and extended knowledge, and

thus this process itself, in a feedback process (7), generates mechanisms changing and extending the special knowledge (5) and every given explicit description of these mechanisms only contains elementary special knowledge (5) and elementary knowledge of the reflection base (6).

3. A computer system according to claim 1 or a process according to claim 1 characterized in that it, by means of the reflection base (6), generates elementary special knowledge (5) for input signals (1) for which no special knowledge is available.

4. A computer system according to claim 1 or a process according to claim 1 characterized in that the special knowledge (5) consists of domain-specific knowledge components and is changed and extended by division and unification processes of these knowledge components.

5. A computer system according to claim 1 or a process according to claim 1 characterized in that the processes changing and extending the special knowledge (5) contain simplification processes which filter out essential special knowledge.

6. A computer system according to claim 1 or a process according to claim 1 characterized in that it tends to change and extend its special knowledge (5) in such a manner that the amount of the resources required for solving problems decreases and thus the generation of new knowledge in this computer system obeys the principle of economy.

7. A computer system according to claim 1 or a process according to claim 1 characterized in that it generates variations of new special knowledge (5) by means of more elementary special knowledge (5) and the reflection base (6) and then selects the variations having the greatest efficiency.

8. A computer system according to claim 1 or a process according to claim 1 characterized in that it changes and extends the reflection base (6) in the same way as it changes and extends the special knowledge (5), wherein more elementary knowledge in the reflection base (6) takes over the function of the reflection base (6) and the changed and extended knowledge the function of the special knowledge (5).

9. A computer system according to claim 1 or a process according to claim 1 characterized in that the reflection base (6) contains a universal set of elementary complete instructions, from which all complete instructions can be composed, and elementary exact knowledge about these instructions.

10. A computer system according to claim 1 or a process according to claim 1 characterized in that it is able to determine functional values of non-computable functions in the same way as it generates new special knowledge (5).

11. A computer system according to claim 1 or a process according to claim 1 characterized in that it cannot completely show the correctness of new special knowledge (5) by means of its previous special knowledge (5) but its correctness is subject to error and can only be confirmed by its application.

12. A computer system according to claim 1 or a process according to claim 1 characterized in that it contains several reflection bases (5) and the generation of new special knowledge (5) is carried out in several processes on the basis of these reflection bases.

22

**Revendications**

1. Système d'ordinateur, qui comprend une mémoire (3) pour la mémorisation de connaissances, y compris de connaissances spécifiques (5), qui à l'aide des connaissances traite des signaux d'entrée (1) et produit comme résultat final des signaux de sortie (2) représentant des informations, qui à cette occasion génère des instructions (4) se composant d'instructions élémentaires complètes d'un langage de programmation, et qui contrôle l'exécution de ces instructions (4) à l'aide des connaissances spécifiques (5), caractérisé

en ce que les informations dans les signaux d'entrée et de sortie (1, 2), y compris leurs relations, ne doivent pas être complètement interprétables en termes théoriques,

en ce que les connaissances de la mémoire (3) contiennent une base de réflexion (6) qui contient des instructions élémentaires complètes d'un langage de programmation, exécutables par des processeurs traditionnels, et des connaissances élémentaires exactes sur ces instructions,

en ce que ce système d'ordinateur modifie et élargit les connaissances spécifiques (5) sur la base d'une analyse d'un domaine d'application, qui s'appuie, dans un processus de rétroaction (7), sur des connaissances spécifiques (5) plus élémentaires que le système a lui-même produites, et sur la base de réflexion (6), à l'occasion de quoi ce sont des connaissances plus élémentaires dans les connaissances spécifiques (5) et dans la base de réflexion (6), ou des variations de ces connaissances, qui forment les parties constitutives des connaissances modifiées et élargies,

et en ce que, ainsi, ce système génère lui-même, dans un processus de rétroaction (7), des mécanismes qui modifient et élargissent les connaissances spécifiques (5), et toute description explicite donnée de ces mécanismes contient seulement des connaissances spécifiques (5) élémentaires et des connaissances élémentaires de la base de réflexion (6).

2. Procédé, qui permet la commande d'un système d'ordinateur comprenant une mémoire (3) pour la mémorisation de connaissances, y compris de connaissances spécifiques (5), qui à l'aide des connaissances traite des signaux d'entrée (1) et produit comme résultat final des signaux de sortie (2) représentant des informations, qui à cette occasion génère des instructions (4) se composant d'instructions élémentaires complètes d'un langage de programmation, et qui contrôle l'exécution de ces instructions (4) à l'aide des connaissances spécifiques (5), caractérisé

en ce que les informations dans les signaux d'entrée et de sortie (1, 2), y compris leurs relations, ne doivent pas être complètement interprétables en termes théoriques,

en ce que les connaissances de la mémoire (3) contiennent une base de réflexion (6) qui contient des instructions élémentaires complètes d'un langage de programmation, exécutables par des processeurs traditionnels, et des connaissances élémentaires exactes sur ces instructions,

en ce que ce procédé modifie et élargit les connaissances spécifiques (5) sur la base d'une analyse d'un domaine d'application, qui s'appuie, dans un processus de rétroaction (7), sur des connaissances spécifiques (5) plus élémentaires que le procédé a lui-même produites, et sur la base de réflexion (6), à l'occasion de quoi ce sont des connaissances plus élémentaires dans les connaissances spécifiques et dans la base de réflexion (6), ou des variations de ces connaissances, qui forment les parties constitutives des connaissances modifiées et élargies,

et en ce que, ainsi, ce procédé génère lui-même, dans un processus de rétroaction (7), des mécanismes qui modifient et élargissent les connaissances spécifiques (5), et toute description explicite donnée de ces mécanismes contient seulement des connaissances spécifiques (5) élémentaires et des connaissances élémentaires de la base de réflexion (6).

3. Système d'ordinateur selon revendication 1 ou procédé selon revendication 2, caractérisé en ce que, à l'aide de la base de réflexion (6), il produit des connaissances spécifiques (5) élémentaires pour signaux d'entrée (1) pour lesquels il n'existe pas de connaissances spécifiques.

4. Système d'ordinateur selon revendication 1 ou procédé selon revendication 2, caractérisé en ce que les connaissances spécifiques (5) consistent en des composantes de connaissance propres au domaine et se modifient et s'élargissent par des processus de division et d'unification de ces composantes de connaissance.

5. Système d'ordinateur selon revendication 1 ou procédé selon revendication 2, caractérisé en ce que les processus modifiant et élargissant les connaissances spécifiques (5) contiennent des processus de simplification qui sélectionnent des connaissances spécifiques essentielles.

**6.** Système d'ordinateur selon revendication 1 ou procédé selon revendication 2, caractérisé en ce qu'il a tendance à modifier et à élargir les connaissances spécifiques (5) de manière à ce que la quantité de moyens d'exploitation nécessaires à la résolution de problèmes diminue et qu'ainsi, dans ce système d'ordinateur, la production de nouvelles connaissances spécifiques (5) obéisse au principe d'économie.

**7.** Système d'ordinateur selon revendication 1 ou procédé selon revendication 2, caractérisé en ce que, à l'aide de connaissances spécifiques (5) plus élémentaires et de la base de réflexion (6), il produit des variations de nouvelles connaissances spécifiques (5) et ensuite sélectionne les variations qui possèdent la plus grande capacité de rendement.

**8.** Système d'ordinateur selon revendication 1 ou procédé selon revendication 2, caractérisé en ce qu'il modifie et élargit la base de réflexion (6) de la même manière qu'il modifie et élargit les connaissances spécifiques (5), à l'occasion de quoi des connaissances plus élémentaires de la base de réflexion (6) se chargent de la fonction de la base de réflexion (6) et les connaissances modifiées et élargies de la base de réflexion (6) se chargent de la fonction des connaissances spécifiques (5).

**9.** Système d'ordinateur selon revendication 1 ou procédé selon revendication 2, caractérisé en ce que la base de réflexion (6) contient un ensemble d'instructions élémentaires complètes, sur la base desquelles toutes les instructions complètes peuvent être représentées, et des connaissances élémentaires exactes sur ces instructions.

**10.** Système d'ordinateur selon revendication 1 ou procédé selon revendication 2, caractérisé en ce qu'il est capable de déterminer des valeurs fontionelles de fonctions non-calculables de la même manière qu'il produit de nouvelles connaissances spécifiques (5).

**11.** Système d'ordinateur selon revendication 1 ou procédé selon revendication 2, caractérisé en ce qu'il ne peut pas démontrer complètement la justesse de nouvelles connaissances spécifiques (5) à l'aide de ses connaissances spécifiques (5) précédentes, mais leur justesse est sujette à l'erreur et peut seulement être confirmée par leur utilisation.

**12.** Système d'ordinateur selon revendication 1 ou procédé selon revendication 2, caractérisé en ce qu'il contient plusieurs bases de réflexion (6) et en ce que la génération de nouvelles connaissances spécifiques (5) s'effectue sur la base de ces bases de réflexion.

FIG. 1

5

SACHKENNTNISSE

51

52    53    54

FIG. 2

5

SACHKENNTNISSE

51    55

52   56   57

FIG. 3

26

FIG. 4